# EUROPÄISCHE PATENTSCHRIFT

(11) **EP 1 756 188 B1**
(45) Veröffentlichungstag und Bekanntmachung des Hinweises auf die Patenterteilung: **05.12.2007**
(21) Anmeldenummer: 05748294.5
(22) Anmeldetag: 07.06.2005
(51) Int. Cl.: C08G 18/62, C08G 18/28, C08G 18/78, C08G 18/75

(54) **AMPHIPHILE POLYMERZUSAMMENSETZUNGEN UND IHRE VERWENDUNG**
AMPHIPHILIC POLYMER COMPOSITIONS AND THEIR USE
COMPOSITIONS POLYMERES AMPHIPHILES ET UTILISATION

(30) Priorität: 08.06.2004 DE 102004027835
(43) Veröffentlichungstag der Anmeldung: 28.02.2007
(73) Patentinhaber: BASF Aktiengesellschaft, 67056 Ludwigshafen (DE)
(72) Erfinder: OETTER, Günter, 67227 Frankenthal (DE); KRÜGER, Christian, 55291 Saulheim (DE); KÖHLE, Harald, 67273 Bobenheim (DE); SCHERER, Maria, 76829 Godramstein (DE); WAGNER, Norbert, 67112 Mutterstadt (DE); BRATZ, Matthias, 67133 Maxdorf (DE); BERGHAUS, Rainer, 67346 Speyer (DE); VAN GELDER, Richard, 67346 Speyer (DE)
(74) Vertreter: Pohl, Michael Friedrich
(86) Internationale Anmeldenummer: PCT/EP2005/006106
(87) Internationale Veröffentlichungsnummer: WO 2005/121201

(56) Entgegenhaltungen:
- EP-A- 0 270 126
- EP-A- 0 318 999
- EP-A- 0 742 238
- EP-A- 1 270 619
- WO-A-00/17250
- WO-A-01/10923
- WO-A-98/51723
- DE-A1- 19 734 893

## Beschreibung

Die vorliegende Erfindung betrifft amphiphile Polymerzusammensetzungen, ein Verfahren zu ihrer Herstellung sowie deren Verwendung zur Herstellung wässriger Wirkstoffzusammensetzungen von in Wasser nicht löslichen Wirkstoffen, insbesondere von Wirkstoffen für den Pflanzenschutz.

Wirkstoffe, d. h. Substanzen, die auch in geringer Konzentration bereits eine physiologische Wirkung entfalten können, werden häufig in Form wässriger Wirkstoffzubereitungen formuliert. So werden beispielsweise im Pflanzenschutz die zur Schädlingsbekämpfung eingesetzten Wirkstoffe, d. h. Insektizide, Fungizide und Herbizide, aber auch Wachstumsregulatoren, häufig als wässrige Konzentrate formuliert und vertrieben, welche vor ihrer Anwendung durch Zugabe einer großen Menge Wasser auf die gewünschte Anwendungskonzentration verdünnt werden (so genannte "Spritzbrühe"). Auch für pharmazeutisch und kosmetisch aktive Substanzen sowie für Nahrungsmittelzusätze, z. B. Vitamine, Provitamine etc. haben sich wässrige Vllirkstoffzubereitungen bewährt. Gleiches gilt für die Formulierung von Effektstoffen, d.h. niedermolekularen Verbindungen, die bereits bei einer geringen Aufwandmenge eine definierte technische Wirkung entfalten, z. B. Farbstoffe und UV-Stabilisatoren.

Ein prinzipielles Problem bei wässrigen Wirkstoffzubereitungen ist die in der Regel geringe Wasserlöslichkeit der Wirkstoffe, die häufig weniger als 10 g/l bei 23 °C/1013 mbar beträgt. Wässrige Formulierungen derartiger Wirkstoffe sind daher heterogene Systeme, wobei der Wirkstoff als emulgierte bzw. dispergierte Phase in einer kontinuierlichen wässrigen Phase vorliegt. Zur Stabilisierung dieser an sich metastabilen Systeme werden üblicherweise Emulgatoren oder Dispergierhilfsmittel eingesetzt. Deren stabilisierende Wirkung ist jedoch häufig nicht zufriedenstellend, so dass eine Abscheidung des Wirkstoffs, beispielsweise ein Aufrahmen oder ein Sedimentieren des Wirkstoffs auftreten kann, insbesondere wenn die wässrige Formulierung längere Zeit bei erhöhter Temperatur und/oder bei stark wechselnden Temperaturen oder in der Nähe des Gefrierpunkts gelagert wird. Dieses Problem ist insbesondere dann ausgeprägt, wenn der Wirkstoff zur Kristallisation neigt.

Häufig werden auch organische Lösungsmittel zur Herstellung wässriger Formulierungen von in Wasser nicht löslichen Wirkstoffen eingesetzt. So verwendet man häufig mit Wasser mischbare Lösungsmittel als Löslichkeitsvermittler, d.h. zur Erhöhung der Löslichkeit des Wirk- bzw. Effektstoffs in der wässrigen Phase. Mit Wasser nicht mischbare Lösungsmittel wiederum dienen dazu, einen bei Anwendungstemperatur festen Wirkstoff in eine flüssige Phase zu überführen, die man dann leichter emulgieren kann. Im Unterschied zu Suspensionen des festen Wirkstoffs ist in den Emulsionen der Wirkstoff in den Lösungsmitteltröpfchen molekular gelöst und ist daher bei Applikation besser verfügbar und daher wirksamer. Der Einsatz größerer Mengen organischer Lösungsmittel ist jedoch auf Grund der bekannten VOC-Problematik aus arbeitshygienischen Gründen, Umweltaspekten und teilweise auch aus toxikologischen Gründen nicht wünschenswert.

Ein weiterer Nachteil konventioneller wässriger Wirkstoffaufbereitungen ist die vergleichsweise große Teilchengröße der in der wässrigen Phase suspendierten bzw. emulgierten Wirkstoffpartikel bzw. Wirkstofftröpfchen, die in der Regel mehrere µm beträgt. Wünschenswert sind jedoch wässrige Formulierungen, in denen der Wirkstoff in möglichst feinverteilter Form vorliegt, um einerseits eine gleichmäßige Verteilung in der Formulierung und damit eine bessere Handhabbarkeit und Dosierbarkeit zu gewährleisten und gleichzeitig, um die Bioverfügbarkeit des Wirkstoffs in der Formulierung zu erhöhen. Erstrebenswert sind dabei Formulierungen, in denen die Wirkstoffhaltige Phase mittlere Teilchengrößen unterhalb 500 nm und insbesondere unterhalb 300 nm aufweist.

Verschiedentlich wurde die Verwendung von amphiphilen Blockcopolymeren zur Solubilisierung von in Wasser unlöslichen Wirkstoffen in einem wässrigen Vehikel vorgeschlagen. Der Begriff "Solubilisierung" bezeichnet eine unter Verwendung von löslichkeitsvermittelnden Substanzen (Hilfsstoffen) erreichte stabile gleichmäßige Verteilung des wasserunlöslichen Wirk- bzw. Effektstoffs in der wässrigen Phase wobei die Partikel der dispersen Wirkstoffphase häufig so klein sind, dass sie sichtbares Licht kaum streuen und die Mischung daher mehr oder weniger transparent erscheint. Die amphiphilen Blockcopolymere weisen dabei in der Regel wenigstens einen hydrophilen Polymerblock und wenigstens einen hydrophoben Polymerblock auf.

So schlägt beispielsweise die US 2003/0009004 zu diesem Zweck amphiphile Blockcopolymere vor, die einen hydrophilen Polyethylenimin-Block und einen hydrophoben Block aus einem biologisch abbaubaren, aliphatischen Polyester umfassen. Von Nachteil ist jedoch, dass vergleichsweise große Mengen Polymer, bezogen auf den Wirkstoff benötigt werden, um stabile wässrige Wirkstoffzubereitungen zu erhalten.

Die US 2003/0157170 beschreibt wasserfreie Wirkstoffzusammensetzungen, die ein amphiphilen Diblockcopolymer mit einem Polyester als hydrophobem Bestandteil und ein Additiv enthalten. Die Zusammensetzungen bilden beim Verdünnen mit Wasser wirkstoffhaltige Mizellen. Nachteilig ist auch hier, dass vergleichsweise große Mengen Polymer, bezogen auf den Wirkstoff benötigt werden.

Die WO 02/82900 beschreibt die Verwendung amphiphiler Blockcopolymere zur Herstellung wässriger Suspensionen von wasserunlöslichen Pflanzenschutzwirkstoffen. Die eingesetzten Blockcopolymere sind erhältlich durch "lebende" bzw. "kontrollierte" radikalische Blockcopolymerisation ethylenisch ungesättigter Monomere. Abgesehen davon, dass derartige Verfahren vergleichsweise aufwändig sind, enthalten die wässrigen Wirkstoffformulierungen größere Mengen an wasserlöslichen organischen Lösungsmitteln. Außerdem erfordert das Verfahren den Einsatz von toxischen Übergangsmetallkatalysatoren, die im Produkt verbleiben. Außerdem neigen die Blockcopolymere zur Braunfärbung.

Die US 4,888,389 beschreibt Blockcopolymere, die einen Polyisobutenblock und einen hydrophilen Block, beispielsweise einen Polyetherblock, aufweisen. Eigene Untersuchungen der Anmelderin haben jedoch gezeigt, dass die dort beschriebenen Blockcopolymere zur Herstellung feinteiliger Wirkstoffzubereitungen nicht geeignet sind.
Zusammenfassend kann gesagt werden, dass trotz der prinzipiellen Vorteile, die amphiphile Blockcopolymere für die Formulierung wasserunlöslicher Wirk- und Effektstoffe in Wasser oder wässrigen Medien haben, die aus dem Stand der Technik bekannten Blockcopolymere nicht vollständig zufriedenstellend sind, sei es, dass ihre Herstellung sehr kompliziert ist, die Stabilität der wässrigen Wirkstoffzubereitungen nicht zufriedenstellend ist, die Aktivität der Wirkstoffe nachteilig beeinflusst wird oder große Mengen an Polymer, bezogen auf den Wirkstoff erforderlich sind, was neben erhöhten Kosten auch bei der Verwendung derartiger Zubereitungen nachteilig auswirken kann.

Der vorliegenden Erfindung liegt daher die Aufgabe zu Grunde, Substanzen bereitzustellen, die eine effektive Solubilisierung von in Wasser unlöslichen Wirkstoffen in einem wässrigen Medium ermöglichen. Diese Substanzen sollten insbesondere geeignet sein, wässrige Wirkstoffzusammensetzungen von in Wasser unlöslichen Wirkstoffen bereitzustellen, die keinen oder nur einen sehr geringen Gehalt an flüchtigen organischen Substanzen aufweisen. Weiterhin ist eine hohe Stabilität der unter Verwendung dieser Substanzen hergestellten wässrigen Wirkstoffzusammensetzungen im Hinblick auf Entmischungsvorgänge bei langer Lagerung, bei Zusatz von Elektrolyt und beim Verdünnen mit Wasser wünschenswert.

Diese Aufgabe wird überraschenderweise gelöst durch eine Polymerzusammensetzung, die erhältlich ist durch Umsetzung von
a) wenigstens einem hydrophoben Polymer P1, das gegenüber Isocyanatgruppen reaktive funktionelle Gruppen R^{P1} trägt und das aus ethylenisch ungesättigten Monomeren M1 aufgebaut ist, umfassend:
   a1) wenigstens 10 Gew.-%, bezogen auf die Gesamtmenge der Monomere M1, Monomere M1a der allgemeinen Formel I 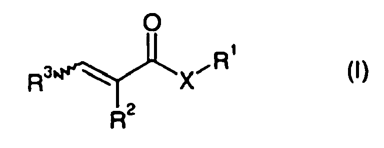 worin X für Sauerstoff oder eine Gruppe N-R⁴ steht;
      - R¹: C₁-C₁₀-Alkyl, C₅-C₁₀-Cycloalkyl, Phenyl oder Phenyl-C₁-C₄-alkyl steht;
      - R²: Wasserstoff oder C₁-C₄-Alkyl bedeutet;
      - R³: Wasserstoff oder C₁-C₄-Alkyl bedeutet; und
      - R₄: Wasserstoff oder C₁-C₄-Alkyl bedeutet;
   a2) bis zu 90 Gew.-%, bezogen auf die Gesamtmenge der Monomere M1, neutrale, monoethylenisch ungesättigte Monomere M1b, deren Wasserlöslichkeit bei 25°C weniger als 50 g/l beträgt und die von den Monomeren M1 a verschieden sind; und
   a3) bis zu 30 Gew.-%, bezogen auf die Gesamtmenge der Monomere M1, ethylenisch ungesättigte Monomeren M1 c, die von den Monomeren M1 a und M1 b verschieden sind,
b) wenigstens einem hydrophilen Polymer P2, das gegenüber Isocyanatgruppen reaktive funktionelle Gruppen R^{P2} trägt,
c) mit wenigstens einer Isocyanatgruppen enthaltenden Verbindung V, die bezüglich der Isocyanatgruppen eine Funktionalität von wenigstens 1,5 aufweist, wobei der Anteil des hydrophoben Polymeren P1 an der amphiphilen Polymerzusammensetzung 20 bis 68 Gew.-%, der Anteil des hydrophilen Polymeren P2 an der amphiphilen Polymerzusammensetzung 30 bis 78 Gew.-% und der Anteil der Verbindung V an der amphiphilen Polymerzusammensetzung 2 bis 20 Gew.-%, jeweils bezogen auf das Gesamtgewicht von Polymer P1, Polymer P2 und Verbindung V, beträgt.

Die Erfindung betrifft somit die hier beschriebenen amphiphilen Polymerzusammensetzungen sowie das Verfahren zu ihrer Herstellung.

Die erfindungsgemäßen amphiphilen Polymerzusammensetzungen sind in vorteilhafter Weise geeignet, Wirk- und Effektstoffe, die in Wasser schlecht oder nicht löslich sind, in wässriger Phase zu stabilisieren und ermöglichen daher die Herstellung wässriger Formulierungen derartiger Wirk- und Effektstoffe. Im Unterschied zu den im Stand der Technik beschriebenen Blockcopolymere lassen sich mit ihnen große Mengen an Wirkstoff, bezogen auf das Polymer, in der wässrigen Phase solubilisieren.

Gegenstand der vorliegenden Erfindung ist daher auch die Verwendung der hier und im Folgenden beschriebenen amphiphilen Polymerzusammensetzungen zur Stabilisierung von Wirkstoffen und/oder Effektstoffen, die in Wasser schlecht oder nicht löslich sind, in einem wässrigen Medium.

Gegenstand der vorliegenden Erfindung ist daher auch die Verwendung der hier beschriebenen amphiphilen Polymerzusammensetzungen zur Herstellung von Formulierungen von in Wasser unlöslichen oder schlecht löslichen Wirk- und Effektstoffen, die im Folgenden auch als Wirkstoffzusammensetzung bzw. Effektstoffzusammensetzung bezeichnet werden.. Eine schlechte Löslichkeit bedeutet in diesem Zusammenhang eine Löslichkeit des Wirk- bzw. Effektstoffs in Wasser von unterhalb 10 g/l, häufig unterhalb 5 g/l, insbesondere unterhalb 1 g/l und speziell unterhalb 0,1 g/l bei 25 °C und 1013 mbar.

Gegenstand der Erfindung sind weiterhin Wirk- bzw. Effektstoffzusammensetzungen, die wenigstens einen in Wasser schlecht- bzw. unlöslichen Wirkstoff und/oder Effektstoff und wenigstens eine amphiphile Polymerzusammensetzung, wie hier und im Folgenden beschrieben, enthalten.

Die erfindungsgemäßen Wirk- bzw. Effektstoffzusammensetzungen können fest oder flüssig sein. Eine bevorzugte Ausführungsform derartiger Zusammensetzung betrifft eine, wässrige, d.h. flüssige Wirkstoffzusammensetzung, die ein wässriges Medium als kontinuierliche Phase und wenigstens eine disperse Phase, enthaltend wenigstens einen Wirkstoff und/oder Effektstoff, der in Wasser bei 25 °C/1013 mbar eine Löslichkeit unterhalb 10 g/l aufweist, und wenigstens eine amphiphile Polymerzusammensetzung enthalten.

Die unter Verwendung der erfindungsgemäßen amphiphilen Blockcopolymere hergestellten wässrigen Wirkstoffzusammensetzungen von in Wasser schlecht- bzw. unlöslichen Wirk- bzw. Effektstoffen umfassen neben einem wässrigen Medium als kontinuierliche Phase wenigstens eine Wirk- bzw. Effektstoff-haltige Phase, in der der Wirk- bzw. Effektstoff und die amphiphile Polymerzusammensetzung in Form von Aggregaten aus Wirkstoff bzw. Effektstoff und den Polymerbestandteilen der amphiphilen Polymerzusammensetzung vorliegen. Diese Wirk- bzw. Effektstoff-haltige Phase bildet somit eine disperse Phase, die den Wirkstoff bzw. den Effektstoff und wenigstens eine erfindungsgemäße amphiphile Polymerzusammensetzung enthalten. Die disperse Phase ist in diesen Zusammensetzungen äußerst feinteilig, d. h. die Partikel der dispersen Phase weisen Teilchengrößen deutlich unterhalb 1 µm auf. In der Regel beträgt der mittlere Teilchendurchmesser, wie er durch Lichtstreuung bestimmt werden kann, nicht mehr 500 nm, häufig nicht mehr als 300 nm und liegt häufig im Bereich von 10 bis 300 nm, vorzugsweise im Bereich von 10 bis 250 nm, insbesondere im Bereich von 20 bis 200 nm oder 20 bis 150 nm und besonders bevorzugt im Bereich von 30 bis 100 nm. Grundsätzlich können die Phasenpartikel noch kleinere mittlere Durchmesser bis hinzu einer nahezu molekulardispersen Verteilung mit Teilchengrößen unterhalb der durch Lichtstreuung erfassbaren Grenze aufweisen (z. B. > 10nm).

Eine weitere bevorzugte Ausführungsform der Erfindung betrifft eine, nicht-wässrige, in der Regel feste oder halbfeste Wirkstoffzusammensetzung, die wenigstens einen Wirkstoff und/oder Effektstoff, der in Wasser bei 25 °C/1013 mbar eine Löslichkeit unterhalb 10 g/l aufweist, und wenigstens eine amphiphile Polymerzusammensetzung enthalten, und die im wesentlichen kein oder nur geringe Mengen, d. h. < 10 Gew.-% Wasser enthält. Als weitere Bestandteile können diese Zusammensetzungen die für den jeweiligen Anwendungszweck typischen Hilfsmittel und Additive enthalten.

Die erfindungsgemäßen Zusammensetzungen, d.h. sowohl wässrige als auch nicht-wässrige Zusammensetzungen, liefern bei beim Verdünnen wässrige Aufbereitungen des Wirk- bzw. Effektstoffs, umfassend eine wässrige, kontinuierliche Phase und wenigstens eine Wirkstoff- bzw. Effektstoff-haltige Phase mit mittleren Teilchengrößen deutlich unterhalb 1 µm, typischerweise nicht mehr 500 nm, häufig nicht mehr als 300 nm, z. B. im Bereich von 10 bis 300 nm, vorzugsweise im Bereich von 10 bis 250 nm, insbesondere im Bereich von 20 bis 200 nm oder 20 bis 150 nm und besonders bevorzugt im Bereich von 30 bis 100 nm.

Die hier angegebenen Teilchengrößen sind gewichtsmittlere Teilchengrößen, wie sie durch dynamische Lichtstreuung ermittelt werden können. Verfahren hierzu sind dem Fachmann geläufig, beispielsweise aus H. Wiese in D. Distler, Wässrige Polymerdispersionen, Wiley-VCH 1999, Kapitel 4.2.1, S. 40ff und dort zitierte Literatur sowie H. Auweter, D. Horn, J. Colloid Interf. Sci. 105 (1985) 399, D. Lilge, D. Horn, Colloid Polym. Sci. 269 (1991) 704 oder H. Wiese, D. Horn, J. Chem. Phys. 94 (1991) 6429.

Die Begriffe "wässriges Medium" und "wässrige Phase" umfassen hier und im Folgenden Wasser, wässrige Mischungen von Wasser mit bis zu 10 Gew.-%, bezogen auf die Mischung, an organischen Lösungsmitteln, die mit Wasser mischbar sind, und Lösungen von Feststoffen in Wasser oder in den wässrigen Mischungen. Beispiele für mit Wasser mischbare Lösungsmittel umfassen C₃-C₄-Ketone wie Aceton und Methylethylketon, cyclische Ether wie Dioxan und Tetrahydrofuran, C₁-C₄-Alkanole wie Methanol, Ethanol, n-Propanol, Isopropanol, n-Butanol, tert.-Butanol, Polyole und deren Mono- und Dimethylether wie Glykol, Propandiol, Ethylenglykolmonomethylether, Diethylenglykol, Diethylenglykolmonomethylether, Diethylenglykoldimethylether, Glycerin, weiterhin C₂-C₃-Nitrile wie Acetonitril und Propionitril, Dimethylsulfoxyd, Dimethylformamid, Formamid, Acetamid, Dimethylacetamid, Butyrolacton, 2-Pyrrolidon und N-Methylpyrrolidon.

Der Begriff "Funktionalität" steht hier und im Folgenden für die mittlere Anzahl der jeweiligen funktionellen Gruppen pro Molekül bzw. pro Polymerkette.

Die erfindungsgemäßen wässrigen Wirkstoffzusammensetzungen zeichnen sich durch eine äußerst hohe Stabilität gegenüber Entmischungen auf. Sie können ohne Entmischung über einen längeren Zeitraum von mehren Monaten auch bei erhöhter Temperatur und/oder bei stark wechselnden Temperaturen gelagert werden. Zudem lassen sich konzentriertere Dispersionen auch ohne Probleme mit Wasser verdünnen, ohne dass es zu Entmischungsphänomenen, wie Koagulation, Kristallisation, Flokkulation oder Sedimentation, kommt. Außerdem weisen die Zusammensetzungen eine hohe Toleranz gegenüber Elektrolyten auf. Zudem ist auf Grund der äußerst feinen Verteilung, entsprechend dem sehr niedrigen Teilchendurchmesser der dispersen Phase, die Aktivität der Wirkstoffe im Vergleich zu konventionellen wässrigen Formulierungen erhöht. Ein weiterer Vorteil ist, dass die erfindungsgemäßen wässrigen Wirkstoffzusammensetzungen auch lösungsmittelarm (Gehalt an flüchtigen Lösungsmitteln < 10 Gew.-%, bezogen auf das Gewicht der Wirkstoffzusammensetzung) oder sogar lösungsmittelfrei (Gehalt an flüchtigen Lösungsmitteln < 1 Gew.-%, bezogen auf das Gewicht der Wirkstoffzusammensetzung) formuliert werden können.
Die zur Herstellung der erfindungsgemäßen amphiphilen Polymerzusammensetzung eingesetzten hydrophoben Polymere P1 als auch die hydrophilen Polymere P2 weisen gegenüber Isocyanatgruppen reaktive funktionelle Gruppen R^{P1} bzw. R^{P2} auf, die unter Bindungsbildung mit der Isocyanatgruppe der Verbindung V reagieren. Beispiele für geeignete funktionelle Gruppen sind Hydroxylgruppen, Mercaptogruppen (SH) und primäre und sekundäre Aminogruppen. Bevorzugte funktionelle Gruppen sind Hydroxylgruppen, insbesondere an ein aliphatisches oder cycloaliphatisches C-Atom gebundene Hydroxylgruppen.

Da die Isocyanatgruppen enthaltende Verbindung V im Mittel pro Molekül wenigstens 1,5 Isocyanatgruppen aufweist, bilden sich bei der Umsetzung von V mit dem Polymeren P1 und dem Polymeren P2 zumindest teilweise Blockcopolymere, welche sowohl wenigstens einen hydrophoben Polymerblock, welcher sich vom hydrophoben Polymeren P1 ableitet, als auch wenigstens einen hydrophilen Polymerblock, welcher sich vom hydrophilen Polymeren P2 ableitet, aufweisen. Im Unterschied zu den amphiphilen Blockcopolymeren des Stands der Technik sind dabei die Blöcke nicht direkt miteinander, sondern über einen Linker miteinander verknüpft, welcher wenigstens zwei Urethan- und/oder Harnstoffgruppen aufweist. Im Unterschied zu den Blockcopolymeren des Stands der Technik weisen die erhaltenen amphiphilen Polymerzusammensetzungen in der Regel noch in untergeordnetem Maße nichtumgesetzte Polymere P1 und/oder P2 sowie symmetrische Umsetzungsprodukte, die entweder ausschließlich von Polymeren P1 abgeleitete Polymerblöcke oder ausschließlich von Polymeren P2 abgeleitete Polymerblöcke aufweisen. Dennoch bleiben die vorteilhaften amphiphilen Eigenschaften der Polymerzusammensetzung gewahrt.

Als hydrophobe Polymere P1 kommen grundsätzlich alle aus ethylenisch ungesättigten Monomeren M1 aufgebauten Polymere in Betracht, die zu wenigstens 10 Gew.-%, vorzugsweise zu wenigstens 30 Gew.-%, insbesondere zu wenigstens 50 Gew.-%, besonders bevorzugt zu wenigstens 60 Gew.-%, bezogen auf die Gesamtmenge der Monomere M1, Monomere M1a einpolymerisiert enthalten und die die geforderte Anzahl an reaktiven Gruppen R^{P1} aufweisen.

Bevorzugte Monomere M1a sind solche, worin R³ in Formel I für Wasserstoff steht. R² steht vorzugsweise für Wasserstoff oder Methyl. X steht vorzugsweise für O, NH, NCH₃ oder NC₂H₅.

R¹ steht vorzugsweise für
- C₁-C₁₀-Alkyl wie Methyl, Ethyl, n-Propyl, iso-Propyl, n-Butyl, 2-Butyl, Isobutyl, tert.-Butyl, 1-Pentyl, 2-Pentyl, Neopentyl, n-Hexyl, 2-Hexyl, n-Octyl, 2-Ethylhexyl, 2-Propylheptyl oder n-Decyl, wobei für R² = H R¹ insbesondere von Methyl verschieden ist;
- C₅-C₁₀-Cycloalkyl wie Cyclopentyl, Cyclohexyl oder Methylcyclohexyl, oder
- Phenyl-C₁-C₄-alkyl wie Benzyl, 1- oder 2-Phenylethyl, 1-, 2- oder 3-Phenylpropyl. Insbesondere steht R¹ für C₁-C₁₀-Alkyl, wobei für R² = H R¹ insbesondere von Methyl verschieden ist.

Besonders bevorzugte Monomere M1a sind daher die Ester der Acrylsäure mit C₂-C₁₀-Alkanolen (= C₂-C₁₀-Alkylacrylate) wie Ethylacrylat, n-Butylacrylat, Isobutylacrylat, tert.-Butylacrylat, n-Hexylacrylat, 2-Ethylhexylacrylat und 3-Propylheptylacrylat, die Ester der Methacrylsäure mit C₁-C₁₀-Alkanolen wie Methylmethacrylat, Ethylmethacrylat, n-Butylmethacrylat, Isobutylmethacrylat, tert.-Butylmethacrylat und n-Hexylmethacrylat. Bevorzugte Monomere M1a sind außerdem die N-(C₂-C₁₀-Alkyl)amide der Acrylsäure und der Methacrylsäure sowie die N-(C₁-C₂-Alkyl)-N-(C₂-C₁₀-alkyl)amide der Acrylsäure und der Methacrylsäure, z. B. N-Ethylacrylamid, N,N-Diethylacrylamid, N-Butylacrylamid, N-Methyl-N-propylacrylamid, N-(n-Hexyl)acrylamid, N-(n-Octyl)acrylamid und die entsprechenden Methacrylamide. Insbesondere umfassen die Monomere M1a wenigstens 50 Gew.-%, insbesondere wenigstens 70 Gew.-%, bezogen auf die Gesamtmenge der Monomere M1a wenigstens eines C₁-C₄-Alkylmethacrylats (R' = C₁-C₄-Alkyl, R² = CH₃ und R³ = H), und hierunter besonders bevorzugt Methylmethacrylat.

Neben den Monomeren M1a kann das hydrophobe Polymer P1 auch von den Monomeren M1a verschiedene Monomere M1b in einer Menge bis 90 Gew.-%, vorzugsweise bis 70 Gew.-%, insbesondere bis 50 Gew.-% und besonders bevorzugt bis 40 Gew.-%, bezogen auf die Gesamtmenge der Monomere M1 einpolymerisiert enthalten. Hierbei handelt es sich um monoethylenisch ungesättigte Monomere mit einer Wasserlöslichkeit < 50 g/l und häufig < 20 g/l bei 25 °C und 1013 mbar. Beispiele für derartige Monomere M1b sind vinylaromatische Monomere wie Styrol, α-Methylstryrol, Vinyltoluol, etc., Olefine mit 2 bis 10 C-Atomen, vorzugsweise α-Olefine mit 3 bis 10 C-Atomen wie Propen, 1-Buten, 1-Penten, 1-Hexen, 1-Octen und 1-Decen, Vinylester aliphatischer Carbonsäuren wie Vinylacetat, Vinylpropionat, Vinyllaurat, Vinylnonanoat, Vinyldecanoat, Vinyllaurat und Vinylstearat, ungesättigte Nitrile wie Acrylnitril und Methacrylnitril, halogenierte Olefine wie Vinylchlorid, C₁₁-C₂₀-Alkylester monoethylenisch ungesättigter Monocarbonsäuren mit vorzugsweise 3 bis 6 C-Atomen, z. B. C₁₁-C₂₀-Alkylacrylate und C₁₁-C₂₀-Alkylmethacrylate wie Laurylacrylat, Laurylmethacrylat, Isotridecylacrylat, Isotridecylmethacrylat, Stearylacrylat, Stearylmethacrylat, Di-C₁-C₂₀-Alkylester ethylenisch ungesättigter Dicarbonsäuren mit vorzugsweise 4 bis 8 C-Atomen, z. B. Di-C₁-C₂₀-Alkylester der Fumarsäure und der Maleinsäure wie Dimethylfumarat, Dimethylmaleat, Dibutylfumarat und Dibutylmaleat, Glycidylester monoethylenisch ungesättigter Monocarbonsäuren mit vorzugsweise 3 bis 6 C-Atomen, wie Glycidylacrylat und Glycidylmethacrylat. Bevorzugte Monomere M1 b sind vinylaromatische Monomere und hierunter insbesondere Styrol. In einer Ausführungsform beträgt der Anteil der Monomere M1 b 1 bis 90 Gew.-%, vorzugsweise 5 bis 70 Gew.-%, insbesondere 7 bis 50 Gew.-% und besonders bevorzugt 10 bis 40 Gew.-%, bezogen auf die Gesamtmenge der Monomere M1. Vorzugsweise beträgt die Gesamtmenge an Monomeren M1a und M1 b wenigstens 80 Gew.-%, insbesondere wenigstens 90 Gew.-% und besonders bevorzugt wenigstens 95 Gew.-% der Monomere M1.

Neben den Monomeren M1a und gegebenenfalls M1b können die Polymere P1 bis zu 30 Gew.-%, häufig nicht mehr als 20 Gew.-%, insbesondere nicht mehr als 10 Gew.-% oder nicht mehr als 5 Gew.-%, bezogen auf die Gesamtmenge der Monomere M1, ethylenisch ungesättigte Monomeren M1 c, die von den Monomeren M1 a und M1b verschieden sind, einpolymerisiert enthalten.

Die Monomere M1c sind vorzugsweise ausgewählt unter neutralen monoethylenisch ungesättigte Monomere M1c.1, deren Wasserlöslichkeit bei 25 °C wenigstens 50 g/l und insbesondere wenigstens 100 g/l beträgt und monoethylenisch ungesättigten Monomeren M1c.2. die wenigstens eine ionische oder ionisierbare Gruppe tragen.

Beispiele für Monomere M1c.1 sind die Amide der vorgenannten ethylenisch ungesättigten Carbonsäuren, insbesondere Acrylamid und Methacrylamid, sowie N-Hydroxyalkylamide, insbesondere N-Hydroxymethylamide der vorgenannten ethylenisch ungesättigten Carbonsäuren, insbesondere N-Methylolacrylamid und N-Methylolmethacrylamid, ethylenisch ungesättigte Nitrile wie Methacrylnitril und Acrylnitril, Hydroxyalkylester der vorgenannten a,β-ethylenisch ungesättigten C₃-C₈-Monocarbonsäuren und der C₄-C₈-Dicarbonsäuren, insbesondere Hydroxyethylacrylat, Hydroxyethylmethacrylat, 2- und 3-Hydroxypropylacrylat, 2- und 3-Hydroxypropylmethacrylat, Vinyl- und Allylether von Polyethylenglykolen oder von Alkylpolyethylenglykolen, Ester der vorstehend genannten monoethylenisch ungesättigten Mono- und Dicarbonsäuren mit C₂-C₄-Polyalkylenglykolen, insbesondere die Ester dieser Carbonsäuren, speziell der Acrylsäure oder der Methacrylsäure mit Polyethylenglykol oder Alkyl-Polyethylenglykolen, wobei der (Alkyl)polyethylenglykol-Rest in derartigen Estern und Ethern üblicherweise ein Molekulargewicht im Bereich von 100 bis 3000 aufweist. Zu den Monomeren M1c.1 zählen weiterhin N-Vinylamide wie N-Vinylformamid, N-Vinylpyrrolidon und N-Vinylcaprolactam. Zu den Monomeren M1c.1 zählen weiterhin Harnstoffgruppen tragende Monomere wie N-(2-Acrylamidoethyl)-imidazolin-2-on und N-(2-Methacrylamidoethyl)-imidazolin-2-on und Aldehyd- oder Ketogruppen aufweisende Monomere wie 3-(Acrylamido)-3-methylbutan-2-on (Diacetonacrylamid), 3-(Methacrylamido)-3-methylbutan-2-on, 2,4-Dioxapentylacrylat und 2,4-Dioxapentylmethacrylat. Der Anteil der Monomere M1c. 1 wird vorzugsweise nicht mehr als 20 Gew.-%, und insbesondere nicht mehr als 10 Gew.-%, z. B. 0,1 bis 10 und insbesondere 0,5 bis 5 Gew.-%, bezogen auf die Gesamtmenge der Monomere M1, ausmachen.

Zu den Monomeren M1c. 2 zählen insbesondere monoethylenisch ungesättigte Monomere M1c. 2s, die wenigstens eine Säuregruppe oder wenigstens eine anionische Gruppen aufweisen, insbesondere Monomere, die eine Sulfonsäuregruppe, eine Phosphonsäuregruppe oder ein oder zwei Carbonsäuregruppen aufweisen, sowie die Salze derartiger Monomere, insbesondere die Alkalimetallsalze, z. B. die Natrium- oder Kaliumsalze sowie die Ammoniumsalze. Hierzu zählen ethylenisch ungesättigte Sulfonsäuren, insbesondere Vinylsulfonsäure, 2-Acrylamido-2-methylpropansulfonsäure, 2-Acryloxyethansulfonsäure und 2-Methacryloxyethansulfonsäure, 3-Acryloxy- und 3-Methacryloxypropansulfonsäure, Vinylbenzolsulfonsäure und deren Salze, ethylenisch ungesättigte Phosphonsäuren, wie Vinylphosphonsäure und Vinylphosphonsäuredimethylester und deren Salze und α,β-ethylenisch ungesättigte C₃-C₈-Mono- und C₄-C₈-Dicarbonsäuren, insbesondere Acrylsäure, Methacrylsäure, Crotonsäure, Maleinsäure, Fumarsäure und Itaconsäure. Der Anteil der Monomere M1c.2s wird häufig nicht mehr als 20 Gew.-%, z. B. 0,1 bis 20 Gew.-% und insbesondere 0,5 bis 15 Gew.-%, bezogen auf die Gesamtmenge der Monomere M1, ausmachen. In einer bevorzugten Ausführungsform enthält das Polymer P1 keine oder nicht mehr als 0,1 Gew.-% Monomere M1c.2s einpolymerisiert.

Zu den Monomeren M1c.2 zählen weiterhin monoethylenisch ungesättigte Monomere M1c.2k, die wenigstens eine kationische Gruppe und/oder wenigstens eine im Wässrigen protonierbare Gruppe aufweisen. Zu den Monomeren M1c.2k zählen insbesondere solche, die eine protonierbare Aminogruppe, eine quartäre Ammoniumgruppe, eine protonierbare Iminogruppe oder eine quaternisierte Iminogruppe aufweisen. Beispiele für Monomere mit einer protonierbaren Iminogruppe sind N-Vinylimidazol und Vinylpyridine. Beispiele für Monomere mit einer quaternisierten Iminogruppe sind N-Alkylvinylpyridiniumsalze und N-Alkyl-N'-vinylimidazoliniumsalze wie N-Methyl-N'-vinylimidazoliniumchlorid oder Metosulfat. Unter den Monomeren M1c.2k werden insbesondere die Monomere der allgemeinen Formel II bevorzugt 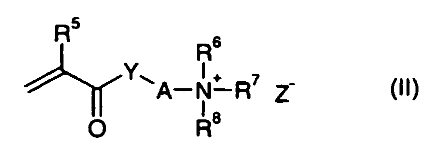 worin
- R⁵: Wasserstoff oder C₁-C₄-Alkyl, insbesondere Wasserstoff oder Methyl,
- R⁶, R⁷: unabhängig voneinander C₁-C₄-Alkyl, insbesondere Methyl, und
- R⁸: Wasserstoff oder C₁-C₄-Alkyl, insbesondere Wasserstoff oder Methyl bedeuten,
- Y: für Sauerstoff, NH oder NR⁹ mit R⁹ = C₁-C₄-Alkyl steht,
- A: für C₂-C₈-Alkylen, z. B. 1,2-Ethandiyl, 1,2- oder 1,3-Propandiyl, 1,4-Butandiyl oder 2-Methyl-1,2-propandiyl, das gegebenenfalls durch 1, 2 oder 3 nicht benachbarte Sauerstoffatome unterbrochen ist, steht und
- Z⁻: für ein Anionenäquivalent, z. B. für Cl⁻, HSO₄⁻, ½ SO₄²⁻ oder CH₃OSO₃⁻ etc. steht,
und für R⁸ = H den freien Basen der Monomere der Formel II.

Beispiele für derartige Monomere M1c.2k sind 2-(N,N-Dimethylamino)ethylacrylat,
2-(N,N-Dimethylamino)ethylmethacrylat, 2-(N,N-Dimethylamino)ethylacrylamid,
3-(N,N-Dimethylamino)propylacrylamid, 3-(N,N-Dimethylamino)propylmethacrylamid,
2-(N,N-Dimethylamino)ethylmethacrylamid,
2-(N,N,N-Trimethylamrnonium)ethylacrylat-Chlorid,
2-(N,N,N-Trimethylammonium)ethylmethacrylat-Chlorid,
2-(N,N,N-Trimethylammonium)ethylmethacrylamid-Chlorid,
3-(N,N,N-Trimethylammonium)propylacrylamid-Chlorid,
3-(N,N,N-Trimethylammonium)propylmethacrylamid-Chlorid,
2-(N,N,N-Trimethylammonium)ethylacrylamid-Chlorid, sowie die entsprechenden Metosulfate und Sulfate. Weitere geeignete Monomere M1c.2k sind Vinylpyridine und Vinylimidazol und deren Quatemisierungsprodukte.

Der Anteil der Monomere M1 c.2k beträgt vorteilhafterweise nicht mehr als 20 Gew.-%, z.B. 0,1 bis 20 Gew.-%, insbesondere 0,5 bis 15 Gew.%, und speziell 1 bis 10 Gew.-%, bezogen auf die Gesamtmenge der Monomere M1. In einer bevorzugten Ausführungsform enthält das Polymer P1 keine oder nicht mehr als 0,1 Gew.-% Monomere M1c.2k einpolymerisiert.

Zu den Monomeren M1 c zählen auch Monomere M1 c.3, die zwei oder mehrere, nicht konjugierte ethylenisch ungesättigte Doppelbindungen aufweisen. Der Anteil derartiger Monomere M1c.3 wird in der Regel nicht mehr als 2 Gew.-% und insbesondere nicht mehr als 0,5 Gew.-%, bezogen auf die Gesamtmonomermenge M1 betragen. Beispiele hierfür sind Vinyl- und Allylester monoethylenisch ungesättigter Carbonsäuren wie Allylacrylat und Allylmethacrylat, Di- und Polyacrylate von Di- oder Polyolen wie Ethylenglykoldiacrylat, Ethylenglykoldimethacrylat, Butandioldiacrylat, Butandioldimethacrylat, Hexandioldiacrylat, Hexandioldimethacrylat, Triethylenglykoldiacrylat, Triethylenglykoltrimethacrylat, Tris(hydroxymethyl)ethantriacrylat und -trimethacrylat, Pentaerythrittriacrylat und -trimethacrylat, ferner die Allyl- und Methallylester von polyfunktionellen Carbonsäuren, wie Diallylmaleat, Diallylfumarat, Diallylphthalat. Typische Monomere M1 c.3 sind auch Verbindungen, wie Divinylbenzol, Divinylharnstoff, Diallylharnstoff, Triallylcyanurat, N,N'-Divinyl- und N,N'-Diallylimidazolidin-2-on, sowie Methylenbisacrylamid und Methylenbismethacrylamid.

Erfindungsgemäß tragen die Polymere P1 reaktive funktionelle Gruppen R^{P1}, die mit den Isocyanatgruppen unter Bindungsbildung reagieren. Die mittlere Anzahl derartiger Gruppen pro Polymermolekül (Funktionalität) beträgt in der Regel nicht mehr als zwei und liegt vorzugsweise im Bereich von 0,3 bis 1,8, insbesondere im Bereich von 0,5 bis 1,5 und speziell im Bereich von 0,6 bis 1,4. Die funktionelle Gruppe R^{P1} kann in der Polymerkette angeordnet sein und befindet sich vorzugsweise am Ende der Polymerkette.

Im Hinblick auf die Verwendung der erfindungsgemäßen amphiphilen Polymerzusammensetzung zur Formulierung von Wirkstoffen weist das hydrophobe Polymer P1 vorzugsweise ein zahlenmittleres Molekulargewicht im Bereich von 500 bis 20000 Dalton und insbesondere im Bereich von 1500 bis 15000 Dalton auf.

Polymere P1 sind prinzipiell aus dem Stand der Technik bekannt, beispielsweise aus US 5,556,918 und EP-A 742 238. Ihre Herstellung erfolgt in der Regel durch radikalisch initiierte Lösungspolymerisation der Monomere M1 in Gegenwart eines Initiators und gegebenenfalls eines Reglers, mit der Maßgabe, dass der Initiator beim Zerfall ein Hydroxyl-Radikal (˙OH-Radikal) und/oder der Regler eine OH-Gruppe oder eine NH₂-Gruppe enthält. Geeignete Initiatoren sind organische Hydroperoxide wie tert.-Butylhydroperoxid, Tetrahydrofuranhydroperoxid, Cumolhydroperoxid oder 2,2'-Azobis(2-methyl-N-(2-hydroxyethyl)propionamid). Geeignete Regler sind Aminoalkohole, Aminophenole und insbesondere Thioalkanole wie 3-Hydroxypropanthiol, 2-Hyroxyethyl-3-mercaptopropionsäureester und vor allem 2-Hydroxyethanthiol (Mercaptoethanol). Sofern ein derartiger Regler eingesetzt wird, kann die Polymerisation auch in Gegenwart eines konventionellen Initiators durchgeführt werden, beispielsweise eines konventionellen Azostarters oder eines organischen Peroxids wie Azobis-(isobutyronitril), Di-(tert.-butyl)peroxid, Didecanoylperoxid, Dibenzoylperoxid, Peressigsäure-tert.-butylester oder 2-Methylperpropionsäure-tert.-butylester. Sofern man die Polymerisation in Gegenwart eines der vorgenannten Regler durchführt, wird man den Regler in der Regel in einer Menge von 0,1 bis 5 Gew.-%, häufig 0,2 bis 4 Gew.-% und insbesondere 0,5 bis 3 Gew.-%, bezogen auf die Gesamtmenge der Monomere M1. einsetzen. Initiatoren werden in der Regel in einer Menge von 0,05 bis 5 Gew.%, häufig 0,1 bis 4 Gew.-% und besonders bevorzugt in einer Menge von 0,2 bis 3 Gew.%, bezogen auf die zu polymerisierenden Monomere M1 eingesetzt. Wegen weiterer Details wird insbesondere auf die Seite 3 der EP 742 238 verwiesen, auf deren Offenbarung Bezug genommen wird.

Hydrophile Polymere P2, die reaktive Gruppen R^{P2} aufweisen, sind dem Fachmann grundsätzlich bekannt. Hierbei handelt es sich in der Regel um Polymere, die für sich gesehen in Wasser löslich sind. Die Wasserlöslichkeit der Polymere kann durch neutrale hydrophile Gruppen wie Carboxamidgruppen, Ethergruppen, Lactamgruppen, Oxazolidingruppen, durch anionische Gruppen bzw. saure Gruppen, z. B. Carboxylatgruppen, Sulfonatgruppen oder Phosphatgruppen, durch basische Gruppen, z. B. durch primäre oder sekundäre Aminogruppen, Imidazolgruppen, Pyridingruppen, oder durch kationische Gruppen, beispielsweise quaternisierte Ammoniumgruppen, quaternisierte Pyridingruppen oder quaternisierte Imidazolgruppen vermittelt werden. Je nach Art der Gruppen unterscheidet man daher zwischen nichtionischen hydrophilen Polymeren P2, anionischen bzw. sauren Polymeren P2 und basischen bzw. kationischen Polymeren P2. Vorzugsweise handelt es sich bei dem Polymeren P2 um ein nichtionisches Polymer, d. h. der Anteil ionischer Gruppen bzw. saurer oder basischer Gruppen beträgt nicht mehr als 0,5 mol/kg Polymer P2 und insbesondere nicht mehr als 0,1 mol/kg Polymer P2.

Beispiele für nichtionische Polymere P2 sind:
- aliphatische Polyether, die zu wenigstens 50 Gew.-% und insbesondere zu wenigstens 70 Gew.-% aus Ethylenoxid-Einheiten aufgebaut sind,
- Homo- und Copolymere ethylenisch ungesättigter Monomere, die wenigstens 50 Gew.-%, insbesondere wenigstens 70 Gew.%, bezogen auf die Gesamtmenge der Monomere M2 wenigstens ein monoethylenisch ungesättigtes hydrophiles Monomer M2a einpolymerisiert enthalten, das eine Wasserlöslichkeit > 50 g/l und insbesondere > 100 g/l bei 25 °C/1013 mbar aufweist. Geeignete Monomere M2a sind die als Monomere M1c.1 genannten Monomere, insbesondere N-Vinyllactame wie N-Vinylpyrrolidon und N-Vinylcaprolactam, die vorgenannten Amide monoethylenisch ungesättiger Monocarbonsäuren wie Methacrylamid, Acrylamid, die vorgenannten Hydroxyalkylester monoethylenisch ungesättigter Monocarbonsäuren wie Hydroxyethylacrylat und Hydroxyethylmethacrylat, Vinyl und Allylester von Polyethylenglykol und von Alkylpolyethylenglykolen sowie die Ester der Acrylsäure und der Methacrylsäure mit Polyethylenglykolen oder Alkylpolyethylenglykolen.
- Poly(2-methyloxazoline) und Poly(2-ethyloxazoline), und
- Poly(α-hydroxycarbonsäure)ester wie Polyglycolid und Polylactid.

Beispiele für geeignete anionische Polymere P2 sind solche, die wenigstens 30 Gew.-% und vorzugsweise wenigstens 50 Gew.%, bezogen auf das Gesamtgewicht des Polymeren P2, monoethylenisch ungesättigte Monomere M2b einpolymerisiert enthalten, die eine Säuregruppe, z. B. eine Carboxylgruppe, eine Sulfonsäuregruppe, eine Phosphatgruppe oder eine Phosphonsäuregruppe, tragen. Beispiele für geeignete Monomere M2b sind die im Zusammenhang mit den Polymeren P1 genannten Monomere M1c.2s, z. B. α,β-ethylenisch ungesättigte Mono- und Dicarbonsäuren wie Acrylsäure, Methacrylsäure, Vinylessigsäure, monoethylenisch ungesättigte Sulfonsäuren wie Vinylsulfonat, Methallylsulfonat, Styrolsulfonsäure, 2-Acrylamido-2-methylpropansulfonsäure und 2-Acryloxyethylsulfonsäure, ethylenisch ungesättigte Phosphonsäuren wie Vinylphosphonat, Allylphosphonat, Methallylphosphonat, 2-Acrylamido-2-methylpropanphosphonsäure und 2-Acryloxyethylphosphonat. Neben den vorgenannten Monomeren M2b können geeignete anionische Polymere P2 bis zu 50 Gew.-% und insbesondere bis 30 Gew.-% Monomere M1a und M1b sowie bis zu 70 Gew.-% Monomere M2a einpolymerisiert enthalten.

Beispiele für geeignete kationische Polymere P2 sind Homo- und Copolymere der zuvor genannten monoethylenisch ungesättigten Monomeren M1c.2k. sowie Copolymere der Monomere M1 c.2k mit den monoethylenisch ungesättigten neutralen Monomeren M1c.1.

Unter den Polymeren P2 sind insbesondere solche bevorzugt, die bezüglich der funktionellen Gruppen R^{P2} eine Funktionalität F2 im Bereich von 0,5 bis 3 und insbesondere im Bereich von 0,6 bis 2,5 aufweisen.

Das zahlenmittlere Molekulargewicht der Polymere P2, bestimmt mittels GPC nach üblichen Methoden, liegt vorzugsweise im Bereich von 500 bis 20000 Dalton und insbesondere im Bereich von 800 bis 15000 Dalton.

Unter den Polymeren P2 sind insbesondere aliphatische Polyether bevorzugt, die wenigstens 50 Gew.-% und insbesondere wenigstens 70 Gew.-% und besonders bevorzugt wenigstens 90 Gew.-%, bezogen auf ihr Gesamtgewicht, aus Ethylenoxid-Einheiten aufgebaut sind. Daneben können die aliphatischen Polyether Struktureinheiten aufweisen, die sich von C₃-C₄-Alkylenoxiden ableiten. Die Polyether können auch eine von Wasserstoff verschiedene Endgruppe aufweisen. Besonders bevorzugte Polyether sind insbesondere solche der allgemeinen Formel III

R^{a}-X-(CHR^{b}-CH₂-O)ₚ-H (III)

worin
- R^{a}: für Wasserstoff, C₁-C₂₀-Alkyl oder Benzyl steht,
- X: Sauerstoff oder NH bedeutet,
- R^{b}: Wasserstoff oder Methyl bedeutet, wobei wenigstens 50 mol-%, insbesondere wenigstens 70 mol-% und vorzugsweise wenigstens 90 mol-% der Gruppen R² für Wasserstoff stehen,
- p: eine ganze Zahl bedeutet, deren Mittelwert im Bereich von 10 bis 500, vorzugsweise 20 bis 250 und insbesondere 25 bis 100 liegt (Zahlenmittel).

Geeignete hydrophile Polymere P2 sind dem Fachmann bekannt und größtenteils kommerziell erhältlich, beispielsweise unter den Handelsbezeichnungen Pluriole® und Pluronic® (Polyether der BASF-Aktiengesellschaft), Sokalan®**,** Kollidon® (Homo- und Copolymere der Monomere M2a, M2b und M1c.2k), oder können durch Routinemethoden hergestellt werden.

Der Gesamtanteil der hydrophoben Polymere P1 an der amphiphilen Polymerzusammensetzung, d.h. die Gesamtmenge aus umgesetztem und nicht umgesetztem Polymer P1, beträgt 20 bis 68 Gew.-% des Gesamtgewichts von Polymer P1, Polymer P2 und Verbindung V.

Der Gesamtanteil der hydrophilen Polymere P2 an der amphiphilen Polymerzusammensetzung, d.h. die Gesamtmenge aus umgesetztem und nicht umgesetztem Polymer P2, beträgt 30 bis 78 Gew.-% des Gesamtgewichts von Polymer P1, Polymer P2 und Verbindung V.

Der Gesamtanteil der Verbindung V an der amphiphilen Polymerzusammensetzung, d.h. die Gesamtmenge eingesetzten Verbindung V, beträgt 2 bis 20 und insbesondere 2 bis 15 Gew,-% des Gesamtgewichts von Polymer P1, Polymer P2 und Verbindung V.

Das Gewichtsverhältnis von Polymer P1 und P2 in der amphiphilen Polymerzusammensetzung, jeweils gerechnet als die Gesamtmenge der zur Herstellung eingesetzten Polymere, liegt vorzugsweise im Bereich von 1:10 bis 10:1 und insbesondere im Bereich von 1:4 bis 2,2:1.

Geeignete Verbindungen V mit einer Funktionatität bezüglich der Isocyanatgruppen von wenigstens 1,5, insbesondere 1,5 bis 4,5 und speziell 1,8 bis 3,5 umfassen aliphatische, cycloaliphatische und aromatische Di- und Polyisocyanate sowie die tsocyanurate, Allophanate, Urethdione und Biurete von aliphatischen, cycloaliphatischen und aromatischen Diisocyanaten.

Vorzugsweise weisen die Verbindungen V im Mittel 1,8 bis 3,5 Isocyanatgruppen pro Molekül auf. Beispiele für geeignete Verbindungen V sind aromatische Diisocyanate wie Toluol-2,4-diisocyanat, Toluol-2,6-diisocyanate, kommerziell erhältliche Mischungen von Toluol-2,4- und -2,6-diisocyanat (TDI), n-Phenylendiisocyanat, 3,3'-Diphenyl-4,4'-biphenylendiisocyanat, 4,4'-Biphenylendiisocyanat, 4,4'-Diphenylmethandiisocyanat, 3,3'-Dichlor-4,4'-biphenylendiisocyanat, Cumen-2,4-diisocyanat, 1,5-Naphthalindiisocyanat, p-Xylytendiisocyanat, p-Phenylendiisocyanat, 4-Methoxy-1,3-phenylendüsocyanat, 4-Chlor-1,3-phenylendiisocyanat, 4-Ethoxy-1,3-phenylendiisocyanat, 2,4-Dimethylen-1 ,3-phenylendiisocyanat, 5,6-Dimethyl-1 ,3-phenylendiisocyanat, 2,4-Diisocyanatodiphenylether, aliphatische Diisocyanate wie Ethylendiisocyanat, Ethylidendiisocyanat, Propylen-1,2-düsocyanat, 1,6-Hexamethylendiisocyanat, 1,4-Tetramethylendiisocyanat, 1,10-Decamethylendiisocyanat und cycloaliphatische Diisocyanate, wie Isophorondiisocyanat (IPDI), Cyclohexylen-1,2-diisocyanat, Cyclohexylen-1,4-diisocyanat und Bis(4,4'-Isocyanatocyclohexyl)methan. Unter den Diisocyanaten sind solche bevorzugt, deren Isocyanatgruppen sich in ihrer Reaktivität unterscheiden, wie Toluol-2,4-diisocyanat, Toluol-2,6-diisocyanat, deren Mischungen und cis- und trans-isophorondiisocyanat.

In einer anderen bevorzugten Ausführungsform der Erfindung setzt man zur Herstellung der erfindungsgemäßen amphiphilen Polymerzusammensetzung ein Biuret oder ein Isocyanurat einer aliphatischen oder cycloaliphatischen Diisocyanatverbindung ein, beispielsweise das Cyanurat von Tetramethylendiisocyanat oder von Hexamethylendiisocyanat.

Zur Herstellung der erfindungsgemäßen amphiphilen Polymerzusammensetzung setzt man das hydrophobe Polymer P1 und das hydrophile Polymer P2 sukzessive oder gleichzeitig unter Reaktionsbedingungen mit der Verbindung V um, unter denen die Gruppen R^{P1} bzw. R^{P2} mit den Isocyanatgruppen unter Bindungsbildung reagieren.

Die Umsetzung kann in Abwesenheit oder in Gegenwart geringer Mengen hierfür üblicher Katalysatoren, welche die Bildung von Urethanen bzw. Harnstoffen fördern, erfolgen. Geeignete Katalysatoren sind beispielsweise tertiäre Amine, z. B. Triethylamin, Tri-n-propylamin, N-Methylpyrrolidin, N-Methylpiperidin und Diazabicyclooctan (DABCO), zinnorganische Verbindungen, insbesondere Dialkylzinn(IV)salze von aliphatischen Carbonsäuren wie Dibutylzinndilaurat und Dibutylzinndioctoat, Zinn(II)dialkanoate wie Zinndioctoat, sowie Cäsiumsalze wie Cäsiumacetat. Sofern erwünscht, wird man den Katalysator in einer Menge von nicht mehr als 0,1 Gew.-%, bezogen auf die Verbindung V, z. B. in einer Menge von 0,01 bis 0,1 Gew.-%, insbesondere bis 0,05 Gew.-% einsetzen.

Die erforderlichen Reaktionstemperaturen hängen naturgemäß von der Reaktivität der funktionellen Gruppe R^{P1} bzw. R^{P2} sowie der Isocyanatverbindung V und, sofern eingesetzt, von Art und Menge des verwendeten Katalysators ab. Sie liegt in der Regel im Bereich von 10 bis 120 °C und insbesondere im Bereich von 15 bis 85 °C.

Es versteht sich von selbst, dass die Umsetzung der Polymere P1 und P2 mit der Isocyanatverbindung V in Abwesenheit von Feuchtigkeit (Wassergehalt vorzugsweise < 10000 ppm und insbesondere < 2000 ppm) erfolgt.

Die Umsetzung kann in Substanz oder in einem organischen Lösungsmittel durchgeführt werden, das gegenüber den Isocyanatgruppen der Verbindung V inert ist. Beispiele für geeignete Lösungsmittel sind aliphatische Ketone wie Aceton, Methylethylketon, Cyclohexanon, Alkylester aliphatischer Carbonsäuren wie Methylacetat, Ethylacetat, Methylpropionat, Ethylpropionat, n-Butylacetat, alicyclische und cyclische Ether wie Diethylether, Diisopropylether, Methyl-tert.-butylether, Tetrahydrofuran, aromatische, aliphatische und alicyclische Kohlenwasserstoffe wie Toluol, Xylole, Hexan, Cyclohexan, sowie N-Alkyllactame wie N-Methylpyrrolidon und Mischungen dieser Lösungsmittel.

Die Umsetzung des Polymers P1 und des Polymers P2 mit der Verbindung V kann sukzessive oder gleichzeitig erfolgen, d. h. Polymer P1 und P2 können nacheinander oder gleichzeitig mit der Verbindung V umgesetzt werden.

Sofern man die Polymere P1 und P2 nacheinander mit der Verbindung V umsetzt, kann man sowohl zunächst das Polymer P1 mit der Verbindung V und anschließend das Polymer P2 mit der Verbindung V umsetzen als auch umgekehrt vorgehen.

Sofern man die Polymere P1 und P2 sukzessive mit der Verbindung V umsetzt, führt man die Umsetzung vorzugsweise so durch, dass nach beendeter Umsetzung mit dem ersten Polymer P1 oder P2 wenigstens 10 mol-% bis 90 mol-%, insbesondere 20 mol-% bis 80 mol-% der Isocyanatgruppen in V mit den funktionellen Gruppen R¹ bzw. R² reagiert haben und 10 bis 90 mol-%, insbesondere 20 bis 80 mol-% der vorhandenen Isocyanatgruppen noch vorliegen. Anschließend führt man dann die Umsetzung mit dem zweiten Polymeren P1 oder P2 durch. Vorzugsweise setzt man daher das erste Polymer P1 oder P2 in einer Menge ein, dass das Molverhältnis von reaktiven Gruppen R^{P1} bzw. R^{P2} zur Anzahl der Isocyanatgruppen pro Molekül V im Bereich von 0,1:1 bis 0,9:1 und insbesondere im Bereich von 0,2:1 bis 0,8:1 liegt. Anschließend setzt man das so erhaltene Produkt mit dem zweiten Polymer ein, wobei man vorzugsweise das zweite Polymer P1 oder P2 in einer solchen Menge einsetzen wird, dass die Gesamtmenge an reaktiven Gruppen R^{P1} + R^{P2} wenigstens der Anzahl der Isocyanatgruppen der Verbindung V entspricht. Bevorzugt wird das Verhältnis R^{P1} + R^{P2} zur Gesamtmenge an Isocyanatgruppen einen Wert von 1,2:1 nicht überschreiten.

Sofern man die Polymere P1 und P2 gleichzeitig mit der Isocyanatverbindung V umsetzt, wird man vorzugsweise die Polymere P1 und P2 in einer Menge einsetzen, dass das Molverhältnis von reaktiven Gruppen R^{P1} + R^{P2} zu den Isocyanatgruppen wenigstens 1:1 beträgt. Bevorzugt wird das Verhältnis R^{P1} + R^{P2} zur Gesamtmenge an Isocyanatgruppen einen Wert von 1,2:1 nicht überschreiten.

Die Isocyanatverbindung V kann in der Umsetzung als solche eingesetzt werden. Es ist jedoch auch möglich, die Isocyanatverbindung V in einer Form einzusetzen, bei der ein Teil der Isocyanatgruppen durch eine Schutzgruppe reversibel blockiert ist. Verbindungen, die Isocyanatgruppen blockieren (verkappen oder schützen), sind in der Literatur vielfach beschrieben (vgl. z. B. Z. W. Wicks, Prog. Org. Coat. 3(1975) 73-99 sowie 9(1981) 3-28 oder Houben-Weyl, Methoden der Organischen Chemie Bd. XIV/2, S. 61 ff., Georg Thieme Verlag, Stuttgart 1963). Als Blockierungsmittel von Isocyanatgruppen seien beispielhaft Phenole, Caprolactam, Imidazole, Pyrazole, Pyrazolinone, 1,2,4-Triazole, Diketopiperazine, Malonsäureester und Oxime genannt. Zur Erzielung des erfindungsgemäßen Erfolgs ist der Einsatz von partiell reversibel blockierten Isocyanaten jedoch nicht erforderlich.

In einer besonders bevorzugten Ausführungsform der Erfindung stellt man in einem ersten Reaktionsschritt das hydrophobe Polymer P1 durch radikalische Lösungsmittelpolymerisation in der oben beschriebenen Weise her und führt in der so erhaltenen flüssigen Reaktionsmischung die Umsetzung mit dem Isocyanat V in der hier beschriebenen Weise durch, ohne das Polymer P1 zuvor zu isolieren. Anschließend setzt man dann die erhaltene Reaktionsmischung mit dem Polymeren P2, vorzugsweise einem Polyether, um. Alternativ kann man die Gewünschte Menge an Polymer P2 zu dem so hergestellten Polymeren P1 geben und anschließend die Umsetzung mit der Verbindung V durchführen.

Für die Herstellung der wässrigen Wirkstoffformulierungen kann die erfindungsgemäß erhaltene Polymerzusammensetzung aus der Reaktionsmischung isoliert werden. Es ist jedoch auch möglich, die Reaktionsmischung als solche einzusetzen.

In einer bevorzugten Ausführungsform der Erfindung ersetzt man das zur Herstellung der Polymerzusammensetzung eingesetzte Lösungsmittel teilweise oder vollständig durch Wasser, wodurch man eine wässrige Dispersion der amphiphilen Polymerzusammensetzung erhält. Dies kann beispielsweise dadurch bewirkt werden, dass man das Lösungsmittel zunächst abdestilliert und anschließend den Rückstand in Wasser oder einem wässrigen Medium dispergiert. Auch kann man zu der Lösung der Polymerzusammensetzung Wasser geben und das Lösungsmittel im Anschluss an die Zugabe des Wassers oder parallel hierzu entfernen.

Die Herstellung der erfindungsgemäßen Wirkstoff- bzw. Effektstoffzusammensetzung kann in unterschiedlicher Weise erfolgen. Typischerweise umfasst die Herstellung der erfindungsgemäßen Wirkstoff- bzw. Effektstoffzusammensetzung die Herstellung bzw. Bereitstellung einer homogenen, nichtwässrigen Mischung, umfassend die amphiphile Polymerzusammensetzung und wenigstens einen Wirkstoff und/oder Effektstoff.

In einer ersten Ausführungsform der vorliegenden Erfindung stellt man die wässrige Wirkstoffzusammensetzung her, indem man zunächst eine homogene, nicht wässrige Mischung, bestehend aus amphiphiler Polymerzusammensetzung und Wirkstoff und/oder Effektstoff herstellt und die so erhaltene Mischung anschließend in Wasser oder einem wässrigen Medium dispergiert. Zum Herstellen der homogenen, nicht wässrigen Mischung wird man in der Regel den Wirkstoff in eine flüssige Form der amphiphilen Polymerzusammensetzung, beispielsweise eine Schmelze oder vorzugsweise eine Lösung in einem organischen Lösungsmittel einarbeiten. Sofern man ein Lösungsmittel verwendet, wird man anschließend das Lösungsmittel möglichst weitgehend und vorzugsweise vollständig entfernen, wobei man eine feste Lösung des Wirkstoffs in der amphiphilen Polymerzusammensetzung erhält. Geeignete Lösungsmittel hierfür sind grundsätzlich solche, die sowohl den Wirkstoff als auch das Polymer zu lösen vermögen, beispielsweise aliphatische Nitrile wie Acetonitril und Propionitril, N,N-Dialkylamide aliphatischer Carbonsäuren wie Dimethylformamid und Dimethylacetamid, N-Alkyllactame wie N-Methylpyrrolidon, die vorgenannten aliphatischen und alicyclischen Ether, beispielsweise Tetrahydrofuran, halogenierte Kohlenwasserstoffe wie Dichlormethan, Dichlorethan und Mischungen der vorgenannten Lösungsmittel. Zur Herstellung der erfindungsgemäßen wässrigen Zusammensetzung wird man anschließend die so erhaltene feste Lösung des Wirkstoffs in der amphiphilen Polymerzusammensetzung in einem wässrigen Medium durch Rühren dispergieren. Das Rühren kann bei Temperaturen im Bereich der Umgebungstemperatur als auch bei erhöhter Temperatur erfolgen, beispielsweise bei einer Temperatur im Bereich von 10 bis 80 °C und insbesondere im Bereich von 20 bis 50 °C.
In einer zweiten Ausführungsform der vorliegenden Erfindung erfolgt die Herstellung der wässrigen Wirkstoffzusammensetzung durch Einarbeiten des Wirkstoffs und/oder Effektstoffs in eine wässrige Lösung/Dispersion der amphiphilen Polymerzusammensetzung. Hierzu geht man in der Regel so vor, das man das Einarbeiten bei einer Temperatur durchführt, die oberhalb der Schmelztemperatur des Wirk- bzw. Effektstoffs liegt und vorzugsweise bei einer Temperatur, bei der die Wirk- bzw. Effektstoffschmelze niedrigviskos ist, d. h. eine Viskosität im Bereich von 1 bis 1000 mPa.s (nach DIN 53019-2 bei 25°C) aufweist. Vorzugsweise erfolgt das Einarbeiten unter Anwendung von starken Scherkräften, beispielsweise in einem Ultraturrax.

In einer dritten Ausführungsform der Erfindung erfolgt die Herstellung der wässrigen Wirkstoffzusammensetzung durch ein Verfahren umfassend die folgenden Schritte a bis c:
a) Herstellung einer Lösung von Wirkstoff und/oder Effektstoff und gegebenenfalls amphiphiler Polymerzusammensetzung in einem organischen Lösungsmittel, das einen Siedepunkt unter dem von Wasser aufweist und
b) Vermischen der Lösung des Wirkstoffs und/oder Effektstoffs mit Wasser oder mit einer wässrigen Lösung des amphiphilen Copolymeren und
c) Entfernen des Lösungsmittels.

Hierbei kann man alternativ so vorgehen, dass die Lösung des Wirkstoffs die amphiphile Polymerzusammensetzung enthält und man diese Lösung mit Wasser vermischt oder dass die Lösung des Wirkstoffs nur einen Teil der amphiphilen Polymerzusammensetzung oder keine amphiphile Polymerzusammensetzung enthält und man diese Lösung mit einer wässrigen Lösung oder Dispersion der amphiphilen Polymerzusammensetzung vermischt. Das Vermischen kann in geeigneten Rührgefäßen erfolgen, wobei man sowohl Wasser oder die wässrige Lösung der amphiphilen Polymerzusammensetzung vorlegen kann und hierzu die Lösung des Wirk- oder Effektstoffs gibt, oder alternativ die Lösung des Wirk- oder Effektstoffs vorlegt und hierzu das Wasser bzw. die wässrige Lösung der amphiphilen Polymerzusammensetzung gibt. Anschließend entfernt man das organische Lösungsmittel, z.B. durch Destillation, wobei man gegebenenfalls Wasser zusetzt.

In einer bevorzugten Variante dieser Ausführungsform gibt man die Wirkstofflösung und das Wasser bzw. die wässrige Lösung der amphiphilen Polymerzusammensetzung kontinuierlich in eine Mischzone und entnimmt dieser kontinuierlich die Mischung, aus der man anschließend das Lösungsmittel entfernt. Die Mischzone kann beliebig ausgestaltet werden. Grundsätzlich sind hierfür alle Apparaturen geeignet, die ein kontinuierliches Mischen von Flüssigkeitsströmen ermöglichen. Derartige Apparaturen sind bekannt, z. B. aus Continuous Mixing of Fluids (J.-H. Henzler) in Ullmann's Encyclopedia 5th ed. on CD-Rom, Wiley-VCH. Die Mischzone können als statische oder dynamische Mischer oder Mischformen davon ausgestaltet sein. Als Mischzonen kommen insbesondere auch Jet-Mischer oder vergleichbare Mischer mit Düsen in Betracht. In einer bevorzugten Ausgestaltung handelt es sich bei der Mischzone um die im "Handbook of Industrial Crystallization" (A.S.Myerson, 1993 Butterworth-Heinemann, Seite 139, ISBN 0-7506-9155-7) beschriebene Apparatur oder eine vergleichbare Apparatur.

Das Volumenverhältnis von Wirkstofflösung zu Wasser bzw. wässriger Lösung der amphiphilen Polymerzusammensetzung kann über weite Bereich variiert werden und liegt vorzugsweise im Bereich von 10:1 bis 1:20 und insbesondere im Bereich von 5:1 bis 1:10.

Naturgemäß sollte das Lösungsmittel geeignet sein, die amphiphile Polymerzusammensetzung und den Wirkstoff in den gewünschten Mengenverhältnissen zu lösen. Geeignete Lösungsmittel kann der Fachmann durch Routineexperimente ermitteln. Beispiele für geeignete Lösungsmittel sind C₂-C₄-Alkanole wie Ethanol, n-Propanol, n-Butanol, Isobutanol, die vorgenannten aliphatischen und alicyclischen Ether wie Diethylether, Diisopropylether, Methyl-tert.-butylether, Dioxan, Tetrahydrofuran, Ketone wie Aceton, Methylethylketon.

In einer weiteren Ausführungsform der vorliegenden Erfindung stellt man eine nicht-wässrige Wirkstoffzusammensetzung her, indem man eine homogene, nicht wässrige Mischung aus amphiphiler Polymerzusammensetzung und Wirkstoff und/oder Effektstoff herstellt. Diese Zusammensetzung ist, wenn Sie keine flüssigen Bestandteile enthält, in der Regel fest. Bezüglich der Herstellung solcher Zusammensetzungen gilt das zuvor im Zusammenhang mit der ersten Ausführungsform für die Herstellung einer homogenen, nicht wässrige Mischung, bestehend aus amphiphiler Polymerzusammensetzung und Wirkstoff und/oder Effektstoff, gesagte in analoger Weise, jedoch können an dieser Stelle gegebenenfalls gewünschte Additive und Hilfsmittel in an sich bekannter Weise in die Zusammensetzung eingearbeitet werden. Diese Variante eignet sich insbesondere zur Herstellung nicht-wässriger Zusammensetzungen.

In den erfindungsgemäßen Wirkstoffzusammensetzungen hat es sich als vorteilhaft erwiesen, wenn das Gewichtsverhältnis von Wirkstoff und/oder Effektstoff zur amphiphilen Polymerzusammensetzung im Bereich von 1:10 bis 3:1 und insbesondere im Bereich von 1:5 bis 2:1 liegt.

Der Gehalt an Wirk- und/oder Effektstoff kann über weite Bereiche variiert werden. Insbesondere ermöglichen die amphiphilen Polymerzusammensetzungen das Herstellen von so genannten Wirkstoffkonzentraten, welche den Wirkstoff in einer Menge von wenigstens 5 Gew.-%, z. B. in einer Menge von 5 bis 50 Gew.-% und insbesondere in einer Menge von 5 bis 20 Gew.-%, bezogen auf das Gesamtgewicht der Zusammensetzung, enthalten.

Vorteilhafterweise können die erfindungsgemäßen Zusammensetzungen, insbesondere die wässrigen Wirkstoffzusammensetzungen, lösungsmittelfrei oder lösungsmittelarm formuliert werden, d. h. der Anteil an flüchtigen Bestandteilen in der Wirkstoffzusammensetzung beträgt häufig nicht mehr als 10 Gew.-%, insbesondere Wirkstoffzusammensetzung beträgt häufig nicht mehr als 10 Gew.-%, insbesondere nicht mehr als 5 Gew.-% und speziell nicht mehr als 1 Gew.-%, bezogen auf das Gesamtgewicht der Zusammensetzung. Flüchtige Bestandteile sind dabei solche, die bei Normaldruck einen Siedepunkt unterhalb 200 °C aufweisen.

In den erfindungsgemäßen Zusammensetzungen können eine Vielzahl unterschiedlicher Wirk- und Effektstoffe formuliert werden. Eine besondere Ausführungsform der Erfindung betrifft die Formulierung von Wirkstoffen für den Pflanzenschutz, d. h. von Herbiziden, Fungiziden, Nematiziden, Akariziden, Insektiziden sowie Wirkstoffen, die das Pflanzenwachstum regulieren.

Beispiele für fungizide Wirkstoffe, die als erfindungsgemäße Wirkstoffzusammensetzung formuliert werden können, umfassen:
- Acylalanine wie Benalaxyl, Metalaxyl, Ofurace, Oxadixyl;
- Aminderivate wie Aldimorph, Dodine, Dodemorph, Fenpropimorph, Fenpropidin, Guazatine, Iminoctadine, Spiroxamin, Tridemorph;
- Anilinopyrimidine wie Pyrimethanil, Mepanipyrim oder Cyrodinyl;
- Antibiotika wie Cycloheximid, Griseofulvin, Kasugamycin, Natamycin, Polyoxin, Streptomycin und Validamycin A;
- Azole wie Bitertanol, Bromuconazole, Cyazofamid, Cyproconazole, Difenoconazole, Dinitroconazole, Epoxiconazol, Etridazole, Fenbuconazole, Fluquinconazole, Flusilazole, Flutriafol, Fuberidazol, Hexaconazol, Hymexazol, Imazalil, Ipconazole, Imibenconazol, Metconazole, Myclobutanil, Penconazole, Perfuazorate, Propiconazole, Prochloraz, Prothioconazole, Simeconazole, Tebuconazole, Tetraconazole, Thiabendazol, Triadimefon, Triadimenol, Triflumizol, Triticonazol, 2-Butoxy-6-iod-3-propylchromen-4-on, 3-(3-Brom-6-fluor-2-methylindol-1-sulfonyl)-[1,2,4]triazol-1-sulfonsäuredimethylamid;
- 2-Methoxybenzophenone, wie sie in EP-A 897904 durch die allgemeine Formel I beschrieben werden, z. B. Metrafenon;
- Dicarboximide wie Iprodion, Myclozolin, Procymidone, Vinclozolin;
- Dithiocarbamate wie Ferbam, Nabam, Maneb, Mancozeb, Metam, Metiram, Propineb, Polycarbamat, Thiram, Ziram, Zineb;
- Heterocyclische Verbindungen wie Anilazine, Benomyl, Boscalid, Carbendazim, Carboxin, Oxycarboxin, Cyazofamid, Dazomet, Dithianon, Ethirimol, Dimethirimol, Famoxadon, Fenamidon, Fenarimol, Fuberidazole, Flutolanil, Furametpyr, Isoprothiolane, Mepronil, Nuarimol, Octhilinone, Picobezamid, Probenazole, Proquinazid, Pyrifenox, Pyroquilon, Quinoxyfen, Silthiofam; Thiabendazole, Thifluzamid, Thiophanat-methyl, Tiadinil, Tricyclazole, Triforine, 3-[5-(4-Chlorphenyl)-2,3-dimethyl-isoxazolidin-3-yl]-pyridine, und Bupirimate;
- Nitrophenylderivative wie Binapacryl, Dinocap, Dinobuton, Nitrophthalisopropyl;
- Phenylpyrrole wie Fenpiclonil sowie Fludioxonil;
- nicht klassifizierte Fungizide wie Acibenzolar-S-methyl, Benthiavalicarb, Carpropamid, Chlorothalonil, Cyflufenamid, Cymoxanil, Diclomezin, Diclocymet, Diethofencarb, Edifenphos, Ethaboxam, Fenhexamid, Fentin-Acetat, Fenoxanil, Ferimzone, Fluazinam, Fosetyl, Fosetyl-Aluminum, lprovalicarb, Hexachlorobenzol, Metrafenon, Pencycuron, Propamocarb, Phthalide, Toloclofos-Methyl, Quintozene, Zoxamid, Isoprothiolan, Fluopicolide (Picobenzamid); Carpropamid, Mandipropamid, N-(2-{4-[3-(4-Chlorphenyl)-prop-2-inyloxy]-3-methoxyphenyl}ethyl)-2-methansulfonylamino-3-methyl-butyramid, N-(2-{4-[3-(4-Chlorphenyl)-prop-2-inyloxy]-3-methoxyphenyl}-ethyl)-2-ethansulfonylamino-3-methylbutyramid; Furametpyr, Thifluzamide, Penthiopyrad, Fenhexamid, 3,4-Dichlorisothiazol-5-carboonsäure-(2-cyano-phenyl)-amide, Flubenthiavalicarb, 3-(4-Chlorphenyl)-3-(2-isopropoxycarbonylamino-3-methyl-butyrylamino)-propionsäuremethylester, {2-Chlor-5-[1-(6-methylpyridin-2-ylmethoxyimino)-ethyl]-benzyl}-carbaminsäuremethylester, {2-Chlor-5-[1-(3-methylbenzyloxyimino)-ethyl]-benzyl}-carbaminsäuremethylester, Flusulfamide, Amide der Formel 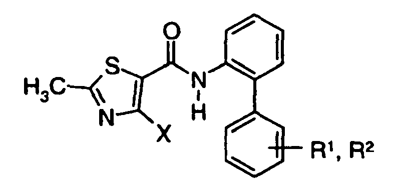 worin
   X für CHF₂ oder CH₃; und
   R¹,R² unabhängig voneinander für Halogen, Methyl oder Halogenmethyl, z. B. CF₃; stehen;
- Strobilurine wie sie in WO 03/075663 durch die allgemeine Formel I beschrieben werden, beispielsweise Azoxystrobin, Dimoxystrobin, Fluoxastrobin, Kresoxim-methyl, Metominostrobin, Orysastrobin, Picoxystrobin, Pyraclostrobin sowie Trifloxystrobin;
- Sulfensäure-Derivative wie Captafol, Captan, Dichlofluanid, Folpet, Tolylfluanid;
- Zimtsäureamide und Analoga wie Dimethomorph, Flumetover, Flumorp;
- 6-Aryl-[1,2,4]triazolo(1,5-a)pyrimidine wie sie z. B. in WO 98/46608, WO 99,41255 oder WO 03/004465 jeweils durch die allgemeine Formel I beschrieben werden, z. B. 5-Chlor-7-(4-methylpiperidin-1-yl)-6-(2,4,6-trifluorphenyl)-[1,2,4]triazolo[1,5-a]pyrimidin;
- Amidfungizide wie Cyclofenamid sowie (Z)-N-[α-(Cyclopropylmethoxyimino)-2,3-difluoro-6-(difluoromethoxy)benzyl]-2-phenylacetamid.

Beispiele für Herbizide, die als erfindungsgemäße wässrige Wirkstoffzusammensetzung formuliert werden können, umfassen:
- 1,3,4-Thiadiazole wie Buthidazole und Cyprazole;
- Amide wie Allidochlor, Benzoylpropethyl, Bromobutide, Chlorthiamid, Dimepiperate, Dimethenamid, Diphenamid, Etobenzanid, Flampropmethyl, Fosamin, Isoxaben, Metazachlor, Monalide, Naptalam, Pronamid, Propanil;
- Aminophosphorsäuren wie Bilanafos, Buminafos, Glufosinateammonium, Glyphosate, Sulfosate;
- Aminotriazole wie Amitrol,
- Anilide wie Anilofos, Mefenacet;
- Aryloxyalkan-säure wie 2,4-D, 2,4-DB, Clomeprop, Dichlorprop, Dichlorprop-P, Fenoprop, Fluroxypyr, MCPA, MCPB, Mecoprop, Mecoprop-P, Napropamide, Napropanilide, Triclopyr;
- Benzoesäuren wie Chloramben, Dicamba;
- Benzothiadiazinone wie Bentazon;
- Bleacher wie Clomazone, Diflufenican, Fluorochloridone, Flupoxam, Fluridone, Pyrazolate, Sulcotrione;
- Carbamate wie Carbetamid, Chlorbufam, Chlorpropham, Desmedipham, Phenmedipham, Vernolate;
- Chinolinsäuren wie Quinclorac, Quinmerac;
- Dichlorpropionsäuren wie Dalapon;
- Dihydrobenzofurane wie Ethofumesate;
- Dihydrofuran-3-on wie Flurtamone;
- Dinitroaniline wie Benefin, Butralin, Dinitramin, Ethalfluralin, Fluchloralin, Isopropalin, Nitralin, Oryzalin, Pendimethalin, Prodiamine, Profluralin, Trifluralin,
- Dinitrophenole wie Bromofenoxim, Dinoseb, Dinoseb-acetat, Dinoterb, DNOC, Minoterb-Acetat;
- Diphenylether wie Acifluorfen-sodium, Aclonifen, Bifenox, Chlornitrofen, Difenoxuron, Ethoxyfen, Fluorodifen, Fluoroglycofen-ethyl, Fomesafen, Furyloxyfen, Lactofen, Nitrofen, Nitrofluorfen, Oxyfluorfen;
- Dipyridyle wie Cyperquat, Difenzoquat-methylsulfat, Diquat, Paraquat-dichlorid;
- Imidazole wie Isocarbamid;
- Imidazolinone wie Imazamethapyr, Imazapyr, Imazaquin, Imazethabenz-methyl, Imazethapyr, Imazapic, Imazamox;
- Oxadiazole wie Methazole, Oxadiargyl, Oxadiazon;
- Oxirane wie Tridiphane;
- Phenole wie Bromoxynil, loxynil;
- Phenoxyphenoxypropionsäureester wie Clodinafop, Cyhalofop-butyl, Diclofopmethyl, Fenoxaprop-ethyl, Fenoxaprop-p-ethyl, Fenthiapropethyl, Fluazifopbutyl, Fluazifop-p-butyl, Haloxyfop-ethoxy-ethyl, Haloxyfop-methyl, Haloxyfop-p-methyl, Isoxapyrifop, Propaquizafop, Quizalofop-ethyl, Quizalofop-p-ethyl, Quizalofop-tefuryl;
- Phenylessigsäuren wie Chlorfenac;
- Phenylpropionsäuren wie Chlorophenprop-methyl;
- ppi-Wirkstoffe wie Benzofenap, Flumiclorac-pentyl, Flumioxazin, Flumipropyn, Flupropacil, Pyrazoxyfen, Sulfentrazone, Thidiazimin;
- Pyrazole wie Nipyraclofen;
- Pyridazine wie Chloridazon, Maleic hydrazide, Norflurazon, Pyridate;
- Pyridincarbonsäuren wie Clopyralid, Dithiopyr, Picloram, Thiazopyr;
- Pyrimidylether wie Pyrithiobacsäure, Pyrithiobac-sodium, KIH-2023, KIH-6127;
- Sulfonamide wie Flumetsulam, Metosulam;
- Triazolcarboxamide wie Triazofenamid;
- Uracile wie Bromacil, Lenacil, Terbacil;
- ferner Benazolin, Benfuresate, Bensulide, Benzofluor, Bentazon, Butamifos, Cafenstrole, Chlorthal-dimethyl, Cinmethylin, Dichlobenil, Endothall, Fluorbentranil, Mefluidide, Perfluidone, Piperophos, Topramezone und Prohexadion-Calcium;
- Sulfonylharnstoffe wie Amidosulfuron, Azimsulfuron, Bensulfuron-methyl, Chlorimuron-ethyl, Chlorsulfuron, Cinosulfuron, Cyclosulfamuron, Ethametsulfuron-methyl, Flazasulfuron, Halosulfuron-methyl, Imazosulfuron, Metsulfuronmethyl, Nicosulfuron, Primisulfuron, Prosulfuron, Pyrazosulfuron-ethyl, Rimsulfuron, Sulfometuron-methyl, Thifensulfuron-methyl, Triasulfuron, Tribenuronmethyl, Triflusulfuron-methyl, Tritosulfuron;
- Pflanzenschutz-Wirkstoffe vom Cyclohexenon-Typ wie Alloxydim, Clethodim, Cloproxydim, Cycloxydim, Sethoxydim und Tralkoxydim. Ganz besonders bevorzugte herbizide Wirkstoffe vom Cyclohexenon-Typ sind: Tepraloxydim (vgl. AGROW, Nr. 243, 3.11.95, Seite 21, Caloxydim) und 2-(1-[2-{4-Chlorphenoxy}propyl-oxyimino]butyl)-3-hydroxy-5-(2H-tetrahydrothiopyran-3-yl)-2-cyclohexen-1-on und vom Sulfonylharnstoff-Typ: N-(((4-methoxy-6-[trifluormethyl]-1,3,5-triazin-2-yl)amino)carbo-nyl)-2-(trifluormethyl)-benzolsulfonamid.

Beispiele für Insektizide, die als erfindungsgemäße wässrige Wirkstoffzusammensetzung formuliert werden können, umfassen:
- Organo(thio)phosphate wie Acephate, Azamethiphos, Azinphos-methyl, Chlorpyrifos, Chlorpyrifos-methyl, Chlorfenvinphos, Diazinon, Dichlorphos, Dimethylvinphos, Dioxabenzofos, Dicrotophos, Dimethoate, Disulfoton, Ethion, EPN, Fenitrothion, Fenthion, Isoxathion, Malathion, Methamidophos, Methidathion, Methyl-Parathion, Mevinphos, Monocrotophos, Oxydemeton-methyl, Paraoxon, Parathion, Phenthoate, Phosalone, Phosmet, Phosphamidon, Phorate, Phoxim, Pirimiphos-methyl, Profenofos, Prothiofos, Primiphos-ethyl, Pyraclofos, Pyridaphenthion, Sulprophos, Triazophos, Trichlorfon; Tetrachlorvinphos, Vamidothion
- Carbamate wie Alanycarb, Benfuracarb, Bendiocarb, Carbaryl, Carbofuran, Carbosulfan, Fenoxycarb, Furathiocarb, Indoxacarb, Methiocarb, Methomyl, Oxamyl, Pirimicarb, Propoxur, Thiodicarb, Triazamate;
- Pyrethroide wie Allethrin, Bifenthrin, Cyfluthrin, Cyphenothrin, Cycloprothrin, Cypermethrin, Deltamethrin, Esfenvalerate, Ethofenprox, Fenpropathrin, Fenvalerate, Cyhalothrin, Lambda-Cyhalothrin, Imoprothrin, Permethrin, Prallethrin, Pyrethrin I, Pyrethrin II, Silafluofen, Tau-Fluvalinate, Tefluthrin, Tralomethrin, Transfluthrin, alpha-Cypermethrin, Zeta-Cypermethrin, Permethrin;
- Arthropode Wachstumsregulatoren: a) Chitinsyntheseinhibitoren z. B. Benzoylharnstoffe wie Chlorfluazuron, Cyromacin, Diflubenzuron, Flucycloxuron, Flufenoxuron, Hexaflumuron, Lufenuron, Novaluron, Teflubenzuron, Triflumuron; Buprofezin, Diofenolan, Hexythiazox, Etoxazole, Clofentazine; b) Ecdysone Antagonisten wie Halofenozide, Methoxyfenozide, Tebufenozide; c) Juvenoide wie Pyriproxyfen, Methoprene, Fenoxycarb; d) Lipid-Biosyntheseinhibitoren wie Spirodiclofen;
- Neonicotinoide wie Flonicamid, Clothianidin, Dinotefuran, Imidacloprid, Thiamethoxam, Nitenpyram, Nithiazin, Acetamiprid, Thiacloprid;
   Weitere unklassifizierte Insektizide wie Abamectin, Acequinocyl, acetamiprid, A-mitraz, Azadirachtin, Bensultap, Bifenazate, Cartap, Chlorfenapyr, Chlordimeform, Cyromazine, Diafenthiuron, Dinetofuran, Diofenolan, Emamectin, Endosulfan, Ethiprole, Fenazaquin, Fipronil, Formetanate, Formetanate hydrochlorid, gamma-HCH Hydramethylnon, Imidacloprid, Indoxacarb, Isoprocarb, Metolcarb, Pyridaben, Pymetrozine, Spinosad, Tebufenpyrad, Thiamethoxam, Thiocyclam, Pyridalyl, Flonicamid, Fluacypyrim, Milbemectin, Spiromesifen, Flupyrazofos, NC 512, Tolfenpyrad, Flubendiamide, Bistrifluron, Benclothiaz, Pyrafluprole, Pyriprole, Amidoflumet, Flufenerim, Cyflumetofen, Acequinocyl, Lepimectin, Profluthrin, Dimefluthrin, Amidrazone, Metaflumizone, N-R'-2,2-Dihalo-1-R"-cyclopropancarboxamid-2-(2,6-dichlor-a,a,a-tri-fluor-p-tolyl)hydrazon, N-R'-2,2-di(R"')propionamid-2-(2,6-dichlor-α,α,α-trifluor-p-tolyl)-hydrazon, wobei halo für Chlor oder Brom, R' für Methyl oder Ethyl, R" für Wasserstoff oder Methyl und R'" für Methyl oder Ethyl stehen, XMC und Xylylcarb sowie Verbindungen der folgenden Formel 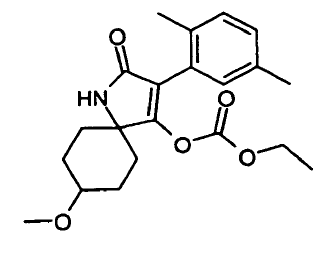 Aminoiso-thiazole der Formel 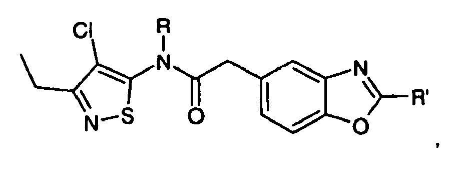 worin
   R = -CH₂O-CH₃ oder H und
   R = -CF₂CF₂CF₃;
      Anthranilamide der Formel 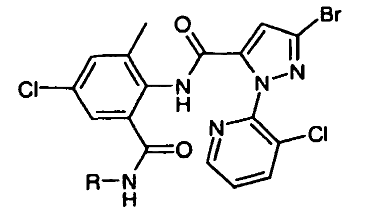 worin R für C₁-C₄-Alkyl wie Methyl, Ethyl, Isopropyl oder n-Butyl steht,
      und die Verbindung der folgenden Formel 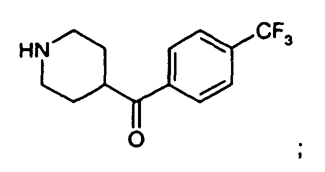
- N-Phenylsemicarbazone, wie sie in EP-A 462 456 durch die allgemeine Formel I beschrieben werden, insbesondere Verbindungen der allgemeinen Formel IV 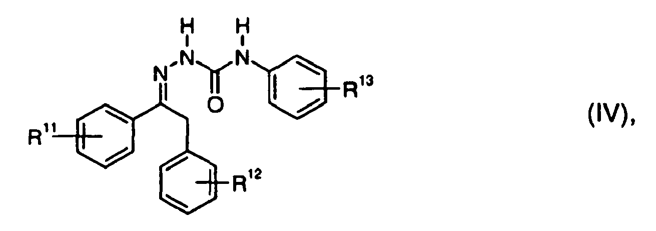 worin R¹¹ und R¹² unabhängig voneinander für Wasserstoff, Halogen, CN, C₁-C₄-Alkyl, C₁-C₄-Alkoxy, C₁-C₄-Haloalkyl oder C₁-C₄-Haloalkoxy stehen und R¹³ für C₁-C₄-Alkoxy, C₁-C₄-Haloalkyl oder C₁-C₄-Haloalkoxy steht, z. B. Verbindung IV, worin R¹¹ für 3-CF₃ und R¹² für 4-CN stehen und R¹³ 4-OCF₃ bedeutet (= Metaflumizone).

Brauchbare Wachstumsregulatoren sind z.B. Chlormequat-chlorid, Mepiquatchlorid, Prohexadion-Calcium oder die die Gruppe der Gibberelline. Dazu gehören z. B. die Gibberelline GA₁, GA₃, GA₄, GA₅ und GA₇ etc. und die entsprechenden exo-16,17-Dihydrogibberelline sowie die Derivate davon, z.B. die Ester mit C₁-C₄-Carbonsäuren. Erfindungsgemäß bevorzugt ist das exo-16,17-Dihydro-GA₅-13-acetat, weiterhin 1-Naphthylacetamid, 1-Naphthylessigsäure, 2-Naphthyloxyessigsäure, 3-CPA, 4-CPA, Ancymidol, Anthrachinon, BAP, Butifos; Tribufos, Butralin, Chlorflurenol, Clofencet, Cyclanilide, Daminozide, Dicamba, Dikegulac sodium, Dimethipin, Chlorfenethol, Etacelasil, Ethephon, Ethychlozate, Fenoprop, 2,4,5-TP, Fluoridamid, Flurprimidol, Flutriafol, Guazatin, Imazalil, Indolylbuttersäure, Indolylessigsäure, Karetazan, Kinetin, Lactidichlor-ethyl, Maleic hydrazide, Mefluidide, Naptalam, Paclobutrazole, Quinmerac, Sintofen, Tetcyclacis, Thidiazuron, Triiodobezoicacid, Triapenthenol, Triazethan, Tribufos, Trinexapac-ethyl und Uniconazole.

Eine bevorzugte Ausführungsform der Erfindung betrifft die Verwendung der erfindungsgemäßen amphiphilen Polymerzusammensetzungen zur Herstellung wässriger Wirkstoffzusammensetzungen von Fungiziden, insbesondere Strobilurinen, Azolen und 6-Aryltriazolo[1,5a]pyrimidinen, wie sie z.B. in WO 98/46608, WO 99/41255 oder WO 03/004465 jeweils durch die allgemeine Formel I beschrieben werden, insbesondere für Wirkstoffe der allgemeinen Formel V, 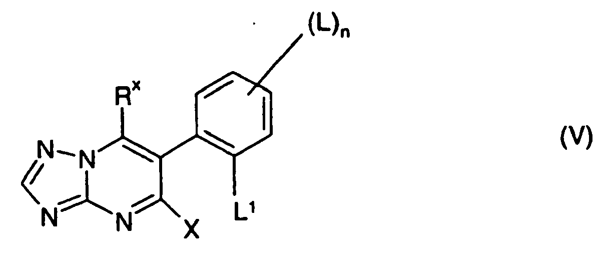 worin:
- R^{x}: für eine Gruppe NR¹⁴R¹⁵ steht, oder lineares oder verzweigtes C₁-C₈-Alkyl, das gegebenenfalls durch Halogen, OH, C₁-C₄-Alkoxy, Phenyl oder C₃-C₆-Cycloalkyl substituiert ist, C₂-C₆-Alkenyl, C₃-C₆-Cycloalkyl, C₃-C₆-Cycloalkenyl, Phenyl oder Naphthyl, wobei die 4 zuletzt genannten Reste 1, 2, 3 oder 4 Substituenten ausgewählt unter Halogen, OH, C₁-C₄-Alkyl, C₁-C₄-Halogenalkoxy, C₁-C₄-Alkoxy und C₁-C₄-Halogenalkyl aufweisen können;
R¹⁴, R¹⁵ unabhängig voneinander für Wasserstoff, C₁-C₈-Alkyl, C₁-C₈-Halogenalkyl, C₃-C₁₀-Cycloalkyl, C₃-C₆-Halogencycloalkyl, C₂-C₈-Alkenyl, C₄-C₁₀-Alkadienyl, C₂-C₈-Halogenalkenyl, C₃-C₆-Cycloalkenyl, C₂-C₈-Halogericycloalkenyl, C₂-C₈-Alkinyl, C₂-C₈-Halogenalkinyl oder C₃-C₆-Cycloalkinyl,
R¹⁴ und R¹⁵ zusammen mit dem Stickstoffatom, an das sie gebunden sind, fünf- bis achtgliedriges Heterocyclyl, welches über N gebunden ist und ein, zwei oder drei weitere Heteroatome aus der Gruppe O, N und S als Ringglied enthalten und/oder einen oder mehrere Substituenten aus der Gruppe Halogen, C₁-C₆-Alkyl, C₁-C₆-Halogenalkyl, C₂-C₆-Alkenyl, C₂-C₆-Halogenalkenyl, C₁-C₆-Alkoxy, C₁-C₆-Halogenalkoxy, C₃-C₆-Alkenyloxy, C₃-C₆-Halogenalkenyloxy, (exo)-C₁-C₆-Alkylen und Oxy-C₁-C₃-alkylenoxy tragen kann;
- L: ausgewählt ist unter Halogen, Cyano, C₁-C₆-Alkyl, C₁-C₄-Halogenalkyl, C₁-C₆-Alkoxy, C₁-C₄-Halogenalkoxy und C₁-C₆-Alkoxycarbonyl;
- L¹: Halogen, C₁-C₆-Alkyl oder C₁-C₆-Halogenalkyl und insbesondere Fluor oder Chlor bedeutet;
- X: für Halogen, C₁-C₄-Alkyl, Cyano, C₁-C₄-Alkoxy oder C₁-C₄-Halogenalkyl und vorzugsweise für Halogen oder Methyl steht und insbesondere Chlor bedeutet.

Beispiele für Verbindungen der Formel V sind
5-Chlor-7-(4-methylpiperidin-1-yl)-6-(2,4,6-trifluorphenyl)-[1,2,4]triazolo[1,5-a]pyrimidin,
5-Chlor-7-(4-methylpiperazin-1-yl)-6-(2,4,6-trifluorphenyl)-[1,2,4]triazolo[1,5-a]pyrimidin,
5-Chlor-7-(morpholin-1-yl)-6-(2,4,6-trifluorphenyl)-[1,2,4]triazolo[1,5-a]pyrimidin,
5-Chlor-7-(piperidin-1-yl)-6-(2,4,6-trifluorphenyl)-[1,2,4]triazolo[1,5-a]pyrimidin,
5-Chlor-7-(morpholin-1-yl)-6-(2,4,6-trifluorphenyl)-[1,2,4]triazolo[1,5-a]pyrimidin,
5-Chlor-7-(isopropylamino)-6-(2,4,6-trifluorphenyl)-[1,2,4]triazolo[1,5-a]pyrimidin,
5-Chlor-7-(cyclopentylamino)-6-(2,4,6-trifluorphenyl)-[1,2,4]triazolo[1,5-a]pyrimidin,
5-Chlor-7-(2,2,2-trifluorethylamino)-6-(2,4,6-trifluorphenyl)-[1,2,4]triazolo[1,5-a]pyrimidin,
5-Chlor-7-(1,1,1-trifluorpropan-2-ylamino)-6-(2,4,6-trifluorphenyl)-[1,2,4]triazolo[1,5-a]pyrimidin,
5-Chlor-7-(3,3-dimethylbutan-2-ylamino)-6-(2,4,6-trifluorphenyl)-[1,2,4]triazolo[1,5-a]pyrimidin,
5-Chlor-7-(cyclohexylmethyl)-6-(2,4,6-trifluorphenyl)-[1,2,4]triazolo[1,5-a]pyrimidin,
5-Chlor-7-(cyclohexyl)-6-(2,4,6-trifluorphenyl)-[1,2,4]triazolo[1,5-a]pyrimidin,
5-Chlor-7-(2-methylbutan-3-yl)-6-(2,4,6-trifluorphenyl)-[1,2,4]triazolo[1,5-a]pyrimidin,
5-Chlor-7-(3-methylpropan-1-yl)-6-(2,4,6-trifluorphenyl)-[1,2,4]triazolo[1,5-a]pyrimidin,
5-Chlor-7-(4-methylcyclohexan-1-yl)-6-(2,4,6-trifluorphenyl)-[1,2,4]triazolo[1,5-a]pyrimidin,
5-Chlor-7-(hexan-3-yl)-6-(2,4,6-trifluorphenyl)-[1,2,4]triazolo[1,5-a]pyrimidin,
5-Chlor-7-(2-methylbutan-1-yl)-6-(2,4,6-trifluorphenyl)-[1,2,4]triazolo[1,5-a]pyrimidin,
5-Chlor-7-(3-methylbutan-1-yl)-6-(2,4,6-trifluorphenyl)-[1,2,4]triazolo[1,5-a]pyrimidin,
5-Chlor-7-(1-methylpropan-1-yl)-6-(2,4,6-trifluorphenyl)-[1,2,4]triazolo[1,5-a]pyrimidin,
5-Methyl-7-(4-methylpiperidin-1-yl)-6-(2,4,6-trifluorphenyl)-[1,2,4]triazolo[1,5-a]pyrimidin,
5-Methyl-7-(4-methylpiperazin-1-yl)-6-(2,4,6-trifluorphenyl)-[1,2,4]triazolo[1,5-a]pyrimidin,
5-Methyl-7-(morpholin-1-yl)-6-(2,4,6-trifluorphenyl)-[1,2,4]triazolo[1,5-a]pyrimidin,
5-Methyl-7-(piperidin-1-yl)-6-(2,4,6-trifluorphenyl)-[1,2,4]triazolo[1,5-a]pyrimidin,
5-Methyl-7-(morpholin-1-yl)-6-(2,4,6-trifluorphenyl)-[1,2,4]triazolo[1,5-a]pyrimidin,
5-Methyl-7-(isopropylamino)-6-(2,4,6-trifluorphenyl)-[1,2,4]triazolo[1,5-a]pyrimidin,
5-Methyl-7-(cyclopentylamino)-6-(2,4,6-trifluorphenyl)-[1,2,4]triazolo[1,5-a]pyrimidin,
5-Methyl-7-(2,2,2-trifluorethylamino)-6-(2,4,6-trifluorphenyl)-[1,2,4]triazolo[1,5-a]pyrimidin,
5-Methyl-7-(1,1,1-trifluorpropan-2-ylamino)-6-(2,4,6-trifluorphenyl)-[1,2,4]triazolo[1,5-a]pyrimidin,
5-Methyl-7-(3,3-dimethylbutan-2-ylamino)-6-(2,4,6-trifluorphenyl)-[1,2,4]triazolo[1,5-a]pyrimidin,
5-Methyl-7-(cyclohexylmethyl)-6-(2,4,6-trifluorphenyl)-[1,2,4]triazolo[1,5-a]pyrimidin,
5-Methyl-7-(cyclohexyl)-6-(2,4,6-trifluorphenyl)-[1,2,4]triazolo[1,5-a]pyrimidin,
5-Methyl-7-(2-methylbutan-3-yl)-6-(2,4,6-trifluorphenyl)-[1,2,4]triazolo[1,5-a]pyrimidin,
5-Methyl-7-(3-methylpropan-1-yl)-6-(2,4,6-trifluorphenyl)-[1,2,4]triazolo[1,5-a]pyrimidin,
5-Methyl-7-(4-methylcyclohexan-1-yl)-6-(2,4,6-trifluorphenyl)-[1,2,4]triazolo[1,5-a]pyrimidin,
5-Methyl-7-(hexan-3-yl)-6-(2,4,6-trifluorphenyl)-[1,2,4]triazolo[1,5-a]pyrimidin,
5-Methyl-7-(2-methylbutan-1 -yl)-6-(2,4,6-trifluorphenyl)-[1,2,4]triazolo[1,5-a]pyrimidin,
5-Methyl-7-(3-methylbutan-1-yl)-6-(2,4,6-trifluorphenyl)-[1,2,4]triazolo[1,5-a]pyrimidin
und 5-Methyl-7-(1-methylpropan-1-yl)-6-(2,4,6-trifluorphenyl)-[1,2,4]triazolo[1,5-a]pyrimidin.

Eine weitere bevorzugte Ausführungsform der Erfindung betrifft die Verwendung der erfindungsgemäßen amphiphilen Polymerzusammensetzungen zur Herstellung von Wirkstoffzusammensetzungen, insbesondere von wässrigen Wirkstoffzusammensetzungen von Insektiziden, insbesondere von Arylpyrrolen wie Chlorfenapyr, von Pyrethroiden wie Bifenthrin, Cyfluthrin, Cycloprothrin, Cypermethrin, Deltamethrin, Esfenvalerate, Ethofenprox, Fenpropathrin, Fenvalerate, Cyhalothrin, Lambda-Cyhalothrin, Permethrin, Silafluofen, Tau-Fluvalinate, Tefluthrin, Tralomethrin, alpha-Cypermethrin, Zeta-Cypermethrin und Permethrin, von Neonicotinoiden und von Semicarbazonen der Formel IV.

Außerdem eignen sich die erfindungsgemäßen amphiphilen Polymerzusammensetzungen zur Herstellung wässriger Wirkstoffzusammensetzungen von pharmazeutischen Wirkstoffen und Pro-Drugs. Hierzu zählen Benzodiazepine, Antihypertensiva, Vitamine, Cytostatika - insbesondere Taxol, Anästhetika, Neuroleptika, Antidepressiva, Antibiotika, Antimykotika, Fungizide, Chemotherapeutika, Urologika, Thrombozytenaggregationshemmer, Sulfonamide, Spasmolytika, Hormone, Immunglobuline, Sera, Schilddrüsentherapeutika, Psychopharmaka, Parkinsonmittel und andere Antihyperkinetika, Ophthalmika, Neuropathiepräparate, Calciumstoffwechselregulatoren, Muskelrelaxantia, Narkosemittel, Lipidsenker, Lebertherapeutika, Koronarmittel, Kardiaka, Immuntherapeutika, regulatorische Peptide und ihre Hemmstoffe, Hypnotika, Sedativa, Gynäkologika, Gichtmittel, Fibrinolytika, Enzympräparate und Transportproteine, Enzyminhibitoren, Emetika, Durchblutungsfördernde Mittel, Diuretika, Diagnostika, Corticoide, Cholinergika, Gallenwegstherapeutika, Antiasthmatika, Broncholytika, Betarezeptorenblocker, Calciumantagonisten, ACE-Hemmer, Arteriosklerosemittel, Antiphlogistika, Antikoagulantia, Antihypotonika, Antihypoglykämika, Antihypertonika, Antifibrinolytika, Antiepileptika, Antiemetika, Antidota, Antidiabetika, Antiarrhythmika, Antianämika, Antiallergika, Anthelmintika, Analgetika, Analeptika, Aldosteronantagonisten, Abmagerungsmittel. Beispiele für geeignete pharmazeutische Wirkstoffe sind die insbesondere die in den Absätzen 0105 bis 0131 der US 2003/0157170 genannten Wirkstoffe.

Weiterhin eignen sich die erfindungsgemäßen amphiphilen Polymerzusammensetzungen zur Herstellung wässriger Zubereitungen von kosmetischen Wirkstoffen, insbesondere von kosmetischen Öle und Fetten wie Erdnussöl, Jojobaöl, Kokosnussöl, Mandelöl, Olivenöl, Palmöl, Ricinusöl, Sojaöl oder Weizenkeimöl, etherische Öle wie Latschenkiefernöl, Lavendelöl, Rosmarinöl, Fichtennadelöl, Kiefernnadelöl, Eukalyptusöl, Pfefferminzöl, Salbeiöl, Bergamottöl, Terpentinöl, Melissenöl, Wacholderöl, Zitronenöl, Anisöl, Kardamonöl, Campheröl etc. oder für Mischungen aus diesen Ölen.

Außerdem eignen sich die erfindungsgemäßen amphiphilen Polymerzusammensetzungen zur Herstellung von Zubereitungen, insbesondere von wässrigen Zubereitungen von Nahrungsergänzungsmitteln wie wasserunlöslichen Vitaminen und Provitaminen wie Vitamin A, Vitamin A-Acetat, Vitamin D, Vitamin E, Tocopherol-Derivate wie Tocopherolacetat und Vitamin K.

Beispiele für Effektstoffe, die als erfindungsgemäße Wirkstoffzusammensetzung formuliert werden können, sind:
Farbstoffe: z. B. die in DE-A 10245209 beschriebenen Farbstoffe sowie die gemäß Colour-Index als Disperse-Farbstoffe und als Solvent-Farbstoffe bezeichneten Verbindungen, die auch als Dispersionsfarbstoffe bezeichnet werden. Eine Zusammenstellung geeigneter Dispersionsfarbstoffe findet sich beispielsweise in Ullmanns Enzyklopädie der technischen Chemie, 4. Auflage, Bd. 10, S. 155-165 (siehe auch Bd. 7, S. 585ff - Anthrachinonfarbstoffe; Bd. 8, S. 244ff - Azofarbstoffe; Bd. 9, S. 313ff - Chinophthalonfarbstoffe). Auf diese Literaturstelle und die darin genannten Verbindungen wird hiermit ausdrücklich Bezug genommen. Erfindungsgemäß geeignete Dispersionsfarbstoffe und Solvent-Farbstoffe umfassen verschiedenste Farbstoffklassen mit unterschiedlichen Chromophoren, beispielsweise Anthrachinonfarbstoffe, Monoazo- und Disazofarbstoffe, Chinophthalone, Methin- und Azamethinfarbstoffe, Naphthalimidfarbstoffe, Naphthochinonfarbstoffe und Nitrofarbstoffe. Beispiele für erfindungsgemäß geeignete Dispersionsfarbstoffe sind die Dispersionsfarbstoffe der folgenden Colour-Index Liste: C. I. Disperse Yellow 1 - 228, C. I. Disperse Orange 1 - 148, C. I. Disperse Red 1 - 349, C. I. Disperse Violet 1 - 97, C. I. Disperse Blue 1 - 349, C. I. Disperse Green 1 - 9, C. I. Disperse Brown 1 - 21, C. I. Disperse Black 1 - 36. Beispiele für erfindungsgemäß geeignete Solvent-Farbstoffe sind die Verbindungen der folgenden Colour-Index Liste: C. I. Solvent Yellow 2 - 191, C. I. Solvent Orange 1 - 113, C. I. Solvent Red 1 - 248, C. I. Solvent Violet 2 - 61, C. I. Solvent Blue 2 - 143, C. I. Solvent Green 1 - 35, C. I. Solvent Brown 1 - 63, C. I. Solvent Black 3 - 50. Erfindungsgemäß geeignete Farbstoffe sind weiterhin Derivate des Naphthalins, des Anthracens, des Perylens, des Terylens, des Quarterylens, sowie Diketopyrrolopyrrolfarbstoffe, Perinonfarbstoffe, Cumarinfarbstoffe, Isoindolin- und Isoindolinonfarbstoffe, Porphyrinfarbstoffe, Phthalocyanin- und Naphthalocyaninfarbstoffe; und

UV-Absorber: insbesondere Verbindungen aus den nachfolgend genannten Gruppen a bis g
a) 4,4-Diarylbutadiene,
b) Zimtsäureester,
c) Benzotriazole,
d) Hydroxybenzophenone,
e) Diphenylcyanacrylate,
f) Oxamide,
g) 2-Phenyl-1,3,5-triazine;

Zur Gruppe a) der 4,4-Diarylbutadiene zählen beispielsweise Verbindungen der Formel A.

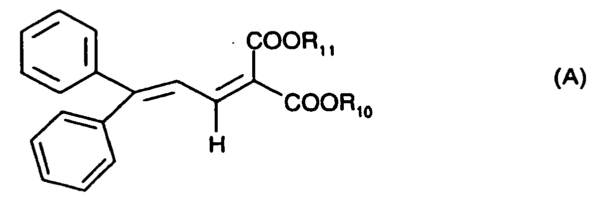

Die Verbindungen sind aus der EP-A-916 335 bekannt. Die Substituenten R₁₀ und/oder R₁₁ bedeuten bevorzugt C₁-C₈-Alkyl und C₅-C₈-Cycloalkyl.

Zur Gruppe b) der Zimtsäureester zählen beispielsweise 4-Methoxyzimtsäure-2-isoamylester, 4-Methoxyzimtsäure-2-ethylhexylester, Methyl-α-methoxycarbonylcinnamat, Methyl-α-cyano-β-methyl-p-methoxycinnamat, Butyl-α-cyano-β-methyl-p-methoxy-cinnamat und Methyl-α-methoxycarbonyl-p-methoxycinnamat.

Zur Gruppe c) der Benzotriazole zählen beispielsweise 2-(2'-Hydroxyphenyl)-benzotriazole wie 2-(2'-Hydroxy-5'-methylphenyl)-benzotriazol, 2-(3',5'-Di-tert-butyl-2'-hydroxyphenyl)benzotriazol, 2-(5'-tert-Butyl-2'-hydroxyphenyl)-benzotriazol, 2-(2'-Hydroxy-5'-(1,1,3,3-tetramethylbutyl)phenyl)benzotriazol, 2-(3',5'-Di-tert-butyl-2'-hydroxyphenyl)-5-chlor-benzotriazol, 2-(3'-tert-Butyl-2'-hydroxy-5'-methylphenyl)-5-chlor-benzotriazol, 2-(3'-sec-Butyl-5'-tert-butyl-2'-hydroxyphenyl)-benzotriazol, 2-(2'-Hydroxy-4'-octyloxyphenyl)-benzotriazol, 2-(3',5'-Di-tert-amyl-2'-hydroxyphenyl)-benzotriazol, 2-(3',5'-Bis-(α,α-dimethylbenzyl)-2'-hydroxyphenyl)-benzotriazol, 2-(3'-tert-Butyl-2'-hydroxy-5'-(2-octyloxycarbonylethyl)phenyl)-5-chlor-benzotriazol, 2-(3'-tert-Butyl-5'-[2-(2-ethylhexyloxy)-carbonylethyl]-2'-hydroxyphenyl)-5-chlor-benzotriazol, 2-(3'-tert-Butyl-2'-hydroxy-5'-(2-methoxycarbonylethyl)phenyl)-5-chlor-benzotriazol, 2-(3'-tert-Butyl-2'-hydroxy-5'-(2-methoxycarbonylethyl)phenyl)-benzotriazol, 2-(3'-tert-Butyl-2'-hydroxy-5'-(2-octyloxycarbonylethyl)phenyl)-benzotriazol, 2-(3'-tert-Butyl-5'-[2-(2-ethylhexyloxy)carbonylethyl]-2'-hydroxyphenyl)-benzotriazol, 2-(3'-Dodecyl-2'-hydroxy-5'-methylphenyl)-benzotriazol und 2-(3'-tert-Butyl-2'-hydroxy-5'-(2-isooctyloxycarbonylethyl)-phenylbenzotriazol, 2,2'-Methylen-bis[4-(1,1,3,3-tetramethylbutyl)-6-benzotriazol-2-yl-phenol]; das Produkt der Veresterung von 2-[3'-tert-Butyl-5'-(2-methoxycarbonylethyl)-2'-hydroxyphenyl]-2H-benzotriazol mit Polyethylenglycol 300; [R-CH₂CH₂-COO(CH₂)₃]₂, mit R = 3'-tert-Butyl-4'-hydroxy-5'-2H-benzotriazol-2-yl-phenyl und Gemische davon.

Zur Gruppe d) der Hydroxybenzophenone zählen beispielsweise 2-Hydroxybenzophenone wie 2-Hydroxy-4-methoxybenzophenon, 2,2'-Dihydroxy-4-methoxybenzophenon, 2,4-Dihydroxybenzophenon, 2,2',4,4'-Tetrahydroxybenzophenon, 2,2'-Dihydroxy-4,4'-dimethoxybenzophenon, 2,2'-Dihydroxy-4,4'-dimethoxybenzophenon, 2-Hydroxy-4-(2-ethylhexyloxy)benzophenon, 2-Hydroxy-4-(n-octyloxy)benzophenon, 2-Hydroxy-4-methoxy-4'-methylbenzophenon, 2-Hydroxy-3-carboxybenzophenon, 2-Hydroxy-4-methoxybenzophenon-5-sulfonsäure und deren Natriumsalz, 2,2'-Dihydroxy-4,4'-dimethoxybenzophenon-5,5'-bissulfonsäure und deren Natriumsalz.

Zur Gruppe e) der Diphenylcyanacrylate zählen beispielsweise Ethyl-2-cyan-3,3-diphenylacrylat, das beispielsweise im Handel unter dem Namen Uvinul® 3035 der Fa. BASF AG, Ludwigshafen erhältlich ist, 2-Ethylhexyl-2-cyan-3,3-diphenylacrylat, das beispielsweise im Handel als Uvinul® 3039 der Fa. BASF AG, Ludwigshafen, erhältlich ist und 1,3-Bis-[(2'-cyano-3',3'-diphenylacryloyl)oxy]-2,2-bis{[2'-cyano-3',3'-diphenylacryloyl)oxy]methyl}propan, das beispielsweise im Handel unter dem Namen Uvinul® 3030 der Fa. BASF AG, Ludwigshafen erhältlich ist.

Zur Gruppe f) der Oxamide zählen beispielsweise 4,4'-Dioctyloxyoxanilid, 2,2'-Diethoxyoxanilid, 2,2'-Dioctyloxy-5,5'-di-tert-butoxanilid, 2,2'-Didodecyloxy-5,5'-di-tert-butoxanilid, 2-Ethoxy-2'-ethyloxanilid, N,N'-Bis(3-dimethylaminopropyl)oxamid, 2-Ethoxy-5-tert-butyl-2'-ethoxanilid und dessen Mischung mit 2-Ethoxy-2'-ethyl-5,4'-di-tert-butoxanilid sowie Mischungen von ortho-, para-Methoxy-disubstituierten Oxaniliden und Mischungen von ortho- und para-Ethoxy disubstituierten Oxaniliden.

Zur Gruppe g) der 2-Phenyl-1,3,5-triazine zählen beispielsweise 2-(2-Hydroxyphenyl)-1,3,5-triazine wie 2,4,6-Tris(2-hydroxy-4-octyloxyphenyl)-1,3,5-triazin, 2-(2-Hydroxy-4-octyloxyphenyl)-4,6-bis(2,4-dimethylphenyl)-1,3,5-triazin, 2-(2,4-Dihydroxyphenyl)-4,6-bis(2,4-dimethylphenyl)-1,3,5-triazin, 2,4-Bis(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl)-1,3,5-triazin, 2-(2-Hydroxy-4-dodecyloxyphenyl)-4,6-bis(2,4-dimethylphenyl)-1,3,5-triazin, 2-(2-Hydroxy-4-tridecyloxyphenyl)-4,6-bis(2,4-dimethylphenyl)-1,3,5-triazin, 2-[2-Hydroxy-4-(2-hydroxy-3-butyloxy-propoxy)-phenyl]-4,6-bis(2,4-dimethyl)-1,3,5-triazin, 2-[2-Hydroxy-4-(2-hydroxy-3-octyloxy-propoxy)phenyl]-4,6-bis(2,4-dimethyl)-1,3,5-triazin, 2-[4-(Dodecyloxy/tridecyloxy-2-hydroxypropoxy)-2-hydroxy-phenyl]-4,6-bis(2,4-dimethylphenyl)-1,3,5-triazin, 2-[2-Hydroxy-4-(2-hydroxy-3-dodecyloxypropoxy)phenyl]-4,6-bis-(2,4-dimeihylphenyl)-1,3,5-triazin, 2-(2-Hydroxy-4-hexyloxyphenyl)-4,6-diphenyl-1,3,5-triazin, 2-(2-Hydroxy-4-methoxyphenyl)-4,6-diphenyl-1,3,5-triazin, 2,4,6-Tris[2-hydroxy-4-(3-butoxy-2-hydroxy-propoxy)phenyl]-1,3,5-triazin und 2-(2-Hydroxyphenyl)-4-(4-methoxyphenyl)-6-phenyl-1,3,5-triazin.

Neben den vorgenannten Bestandteilen können die erfindungsgemäßen wässrigen Wirkstoffzusammensetzungen auch konventionelle oberflächenaktive Substanzen und sonstige Additive enthalten. Zu den oberflächenaktiven Substanzen zählen Tenside, Dispergierhilfsmittel und Netzmittel. Zu den sonstigen Additiven zählen insbesondere Verdickungsmittel, Entschäumer, Konservierungsmittel, Frostschutzmittel Stabilisierungsmittel, etc.

Prinzipiell brauchbar sind anionische, kationische, nichtionische und amphotere Tenside, wobei Polymer-Tenside sowie Tenside mit Heteroatomen in der hydrophoben Gruppe eingeschlossen sind.

Zu den anionischen Tensiden gehören beispielsweise Carboxylate, insbesondere Alkali-, Erdalkali- und Ammoniumsalze von Fettsäuren, z. B. Kaliumstearat, die üblicherweise auch als Seifen bezeichnet werden; Acylglutamate; Sarkosinate, z. B. Natriumlauroylsarkosinat; Taurate; Methylcellulosen; Alkylphosphate, insbesondere Mono- und Diphosphorsäurealkylester; Sulfate, insbesondere Alkylsulfate und Alkylethersulfate; Sulfonate, weitere Alkyl- und Alkylarylsulfonate, insbesondere Alkali-, Erdalkali- und Ammoniumsalze von Arylsulfonsäuren sowie alkylsubstituierten Arylsulfonsäuren, Alkylbenzolsulfonsäuren, wie beispielsweise Lignin- und Phenolsulfonsäure, Naphthalin- und Dibutylnaphthalinsultonsäuren, oder Dodecylbenzolsulfonate, Alkylnaphthalinsulfonate, Alkylmethylestersulfonate, Kondensationsprodukte von sulfoniertem Naphthalin und Derivaten davon mit Formaldehyd, Kondensationsprodukte von Naphthalinsulfonsäuren, Phenol- und/oder Phenolsulfonsäuren mit Formaldehyd oder mit Formaldehyl und Harnstoff, Mono- oder Dialkyl-bernsteinsäureestersulfonate; sowie Eiweißhydrolysate und Lignin-Sulfitablaugen. Die zuvor genannten Sulfonsäuren werden vorteilhafterweise in Form ihrer neutralen oder gegebenenfalls basischen Salze verwendet.

Zu den kationischen Tensiden gehören beispielsweise quaternierte Ammoniumverbindungen, insbesondere Alkyltrimethylammonium- und Dialkyldimethylammonium-Halogenide und -alkylsulfate sowie Pyridin- und Imidazolin-Derivate, insbesondere Alkylpyridinium-Halogenide.

Zu den nichtionischen Tensiden gehören beispielsweise:
- Fettalkoholpolyoxyethylenester, beispielsweise Laurylalkoholpolyoxyethylenetheracetat,
- Alkyl-Polyoxyethylen- und -polyoxypropylen-ether, z. B. von iso-Tridecylalkohol und Fettalkohol-Polyoxyethylenether,
- Alkylarylalkohol-Polyoxyethylenether, z. B. Octylphenol-Polyoxyethylenether,
- alkoxylierte tierische und/oder pflanzliche Fette und/oder Öle, beispielsweise Maisölethoxylate, Rizinusölethoxylate, Talgfettethoxylate,
- Glycerinester, wie beispielsweise Glycerinmonostearat,
- Fettalkoholalkoxylate und Oxoalkoholalkoxylate, insbesondere vom Typ RO-(R₁₈O)ᵣ(R₁₉O)ₛR₂₀ mit R₁₈ und R₁₉ unabhängig voneinander = C₂H₄, C₃H₆, C₄H₈ und R₂₀ = H, oder C₁-C₁₂-Alkyl, R = C₃-C₃₀-Alkyl oder C₆-C₃₀-Alkenyl, r und s unabhängig voneinander 0 bis 50, wobei nicht beide für 0 stehen können, wie iso-Tridecylalkohol und Oleylalkohol-polyoxyethylenether,
- Alkylphenolalkoxylate, wie beispielsweise ethoxyliertes iso-Octyl-, Octyl- oder Nonyl-phenol, Tributylphenol-polyoxyethylenether,
- Fettaminalkoxylate, Fettsäureamid- und Fettsäurediethanol-amidalkoxylate, insbesondere deren Ethoxylate,
- Zuckertenside, Sorbitester, wie beispielsweise Sorbitanfettsäureester (Sorbitanmonooleat, Sorbitantristearat), Polyoxy-ethylensorbitanfettsäureester, Alkylpolyglycoside, N-Alkylgluconamide,
- Alkylmethylsulfoxide,
- Alkyldimethylphosphinoxide, wie beispielsweise Tetradecyldimethylphosphinoxid.

Zu den amphoteren Tensiden gehören beispielsweise Sulfobetaine, Carboxybetaine und Alkyldimethylaminoxide, z. B. Tetradecyldimethylaminoxid.

Weitere Tenside, die hier beispielhaft genannt werden sollen, sind Perfluortenside, Silikontenside, Phospholipide, wie beispielsweise Lecithin oder chemisch modifizierte Lecithine, Aminosäuretenside, z. B. N-Lauroylglutamat.

Sofern nicht spezifiziert, handelt es sich bei den Alkylketten der oben aufgeführten Tenside um lineare oder verzweigte Reste mit üblicherweise 8 bis 20 Kohlenstoffatomen.

In einer Ausführungsform enthalten die erfindungsgemäßen wässrigen Wirkstoffzusammensetzung nicht mehr als 10 Gew.-%, vorzugsweise nicht mehr als 5 Gew.-% und insbesondere nicht mehr als 3 Gew.-%, z.B. 0,01 bis 5 Gew.-% oder 0,1 bis 3 Gew.-% an konventionellen oberflächenaktiven Substanzen, jeweils bezogen auf die Gesamtmenge an Wirkstoff und Polymerzusammensetzung. Die konventionellen oberflächenaktiven Substanzen machen dann vorzugsweise nicht mehr als 5 Gew.-% und insbesondere nicht mehr als 3 Gew.-%, z.B. 0,01 bis 5 Gew.-% oder 0,1 bis 3 Gew.-%, bezogen auf das Gesamtgewicht der Zusammensetzung aus.

Je nach Anwendung kann es jedoch von Vorteil sein, wenn die erfindungsgemäßen Wirkstoffzusammensetzungen mit oberflächenaktiven Substanzen formuliert werden. Dann liegt der Anteil an konventioneller oberflächenaktiver Substanz häufig im Bereich von 0,5 bis 30 Gew.-%, insbesondere im Bereich von 1 bis 20 Gew.-%, bezogen auf die Gesamtmenge an Wirkstoff und Polymerzusammensetzung, bzw. im Bereich von 0,2 bis 20 Gew.-% und insbesondere im Bereich von 0,5 bis 15 Gew.-%, bezogen auf das Gesamtgewicht der formulierten Zusammensetzung.

Auch wenn ein Vorteil der erfindungsgemäßen Zusammensetzungen ihr geringer Gehalt an flüchtigen organischen Substanzen ist, kann es für einige Anwendungen erwünscht sein, die erfindungsgemäßen Zusammensetzungen mit organischen Lösungsmitteln, Ölen und Fetten, vorzugsweise solchen Lösungsmitteln oder Ölen und Fetten, die umweltverträglich oder biokompatibel sind, z. B. die vorgenannten mit Wasser mischbaren Lösungsmittel oder Lösungsmittel, Ölen oder Fetten die mit Wasser nicht oder nur sehr begrenzt mischbar sind, zu mischen z. B. mit:
- Parrafinöle, aromatische Kohlenwasserstoffe und aromatische Kohlenwasserstoffgemische, z. B. Xylole, Solvesso 100, 150 oder 200, und dergleichen,
- Phenole und Alkylphenole, z. B. Phenol, Hydrochinon, Nonylphenol, etc.
- Ketone mit mehr als 4 C-Atomen wie Cyclohexanon, Isophoron, Isopheron, Acetophenon, Acetonaphthon,
- Alkohole mit mehr als 4 C-Atomen wie acetylierter Lanolinalkohol, Cetylalkohol, 1-Decanol, 1-Heptanol, 1-Hexanol, Isooctadecanol, Isopropylalkohol, Oleylalkohol, Benzylalkohol,
- Carbonsäureester, z. B. Adipinsäuredialkylester wie Adipinsäurebis(2-ethylhexyl)ester, Phthalsäuredialkylester wie Phthalsäurebis(2-ethylhexyl)ester, Essigsäurealkylester (auch verzweigte Alkylgruppen) wie Ethylacetat und Acetoessigsäureethylester, Stearate wie Butylstearat, Glycerinmonostearat, Citrate wie Acetyltributylcitrat, weiterhin Cetyloctanoat, Methyloleat, Methyl-p-hydroxyvbenzoat, Methyltetradecanoat, Propyl-p-hydroxybenzoat, Methylbenzoat, Milchsäureester wie Isopropyllacttat, Butyllactat und 2-Ethylhexyllactat,
- Pflanzenöle wie Palmöl, Rapsöl, Rizinusöl und Derivate davon wie z. B. oxydiert, Kokusnussöl, Lebertran, Maiskeimöl, Sojabohnenöl, Leinsamenöl, Olivenöl, Erdnussöl, Färberdistelöl, Sesamsamenöl, Grapefruitöl, Basilikumöl, Aprikosenöl, Ingweröl, Geranienöl, Orangenöl, Rosmarienöl, Macadamiaöl, Zwiebelöl, Mandarinenöl, Kiefernöl, Sonnenblumenöl,
- hydrogenierte Pflanzenöle wie hydrogeniertes Palmöl, hydrogeniertes Rapsöl, hydrogeniertes Sojabohnenöl,
- tierische Öle wie Schweinefettöl, Fischöle,
- Dialkylamide mittel bis langkettiger Fettsäuren z. B. Hallcomide sowie
- Pflanzenölester wie Rapsölmethylester.

Geeignete Verdicker sind Verbindungen, die der Formulierung ein pseudoplastisches Fließverhalten verleihen, d.h. hohe Viskosität im Ruhezustand und niedrige Viskosität im bewegten Zustand. Hier sind beispielsweise Polysaccharide bzw. organische Schichtmineralien wie Xanthan Gum^{®} (Kelzan^{®} der Fa. Kelco), Rhodopol^{®} 23 (Rhone Poulenc) oder Veegum^{®} (Firma R.T. Vanderbilt) oder Attaclay^{®} (Firma Engelhardt) zu nennen, wobei Xanthan-Gum^{®} bevorzugt verwendet wird.

Als für die erfindungsgemäßen Dispersionen geeignete Antischaummittel kommen beispielsweise Silikonemulsionen (wie z. B. Silikon^{®} SRE, Firma Wacker oder Rhodorsil^{®} der Firma Rhodia), langkettige Alkohole, Fettsäuren, fluororganische Verbindungen und deren Gemische in Betracht.

Bakterizide können zur Stabilisierung den erfindungsgemäßen Zusammensetzungen gegen Befall mit Mikroorganismen zugesetzt werden. Geeignete Bakterizide sind beispielsweise Proxel^{®} der Fa. ICI oder Acticide^{®} RS der Fa. Thor Chemie und Kathon^{®} MK der Firma Rohm & Haas.

Geeignete Frostschutzmittel sind organische Polyole, z. B. Ethylenglycol, Propylenglycol oder Glycerin. Diese werden üblicherweise in Mengen von nicht mehr als 10 Gew.-%, bezogen auf das Gesamtgewicht der Wirkstoffzusammensetzung eingesetzt um den gewünschten Gehalt an flüchtigen Verbindungen nicht zu überschreiten. In einer Ausführungsform der Erfindung beträgt der Anteil hiervon verschiedener flüchtiger organischer Verbindungen vorzugsweise nicht mehr als 1 Gew.-%, insbesondere nicht mehr als 1000 ppm.

Gegebenenfalls können die erfindungsgemäßen Wirkstoffzusammensetzungen 1 bis 5 Gew.-% Puffer bezogen auf die Gesamtmenge der hergestellten Formulierung zur pH-Wert Regulation enthalten, wobei sich die Menge und Art des eingesetzten Puffers nach den chemischen Eigenschaften des Wirkstoffes bzw. der Wirkstoffe richtet. Beispiele für Puffer sind Alkalisalze schwacher anorganischer oder organischer Säuren wie z. B. Phosphorsäure, Borsäure, Essigsäure, Propionsäure, Citronensäure, Fumarsäure, Weinsäure, Oxalsäure und Bernsteinsäure.

Je nach Art des enthaltenen Wirkstoffs bzw. Effektstoffs können die erfindungsgemäßen Wirkstoff- bzw. Effektstoffzusammensetzungen in an sich vergleichbare Weise konventionelle Formulierungen des jeweiligen Wirk- bzw. Effektstoffs eingesetzt werden. Beispielsweise können Wirkstoffzusammensetzungen, die wenigstens einen insektiziden, akarziden oder nematiziden Wirkstoff enthalten, zur Bekämpfung von schädlichen Insekten, Acariden, oder Nematoden eingesetzt werden. Wenn die erfindungsgemäßen Wirkstoffzusammensetzungen wenigstens einen fungiziden Wirkstoff enthalten, können sie zur Bekämpfung von Schadpilzen eingesetzt werden. Wenn die erfindungsgemäßen Wirkstoffzusammensetzungen einen herbiziden Wirkstoff enthalten, können sie zur Bekämpfung von Ungräsern und dergleichen eingesetzt werden.

Je nach Art des Wirkstoffs werden die erfindungsgemäßen Zusammensetzungen insbesondere zum Schutz von Pflanzen vor einem Befall mit Schadorganismen wie Insekten, Acarina, Nematoden, oder zum Schutz vor einem Befall mit pflanzenpathogenen Pilzen und dergleichen, oder bei der Saatgutbehandlung oder im Materialschutz eingesetzt, beispielsweise zum Schutz von Lignocellulosematerialien wie Holz, vor einem Befall mit Schadinsekten, wie holzzerstörende Käfer, Termiten, Ameisen und dergleichen, oder vor einem Befall mit holzverfärbenden oder holzzerstörenden Pilzen.

Selbstverständlich können die erfindungsgemäßen Zusammensetzungen auch in der Kosmetik oder in der Medizin oder in technischen Anwendungen eingesetzt werden.

Die Erfindung soll nun anhand der folgenden Beispiele näher erläutert werden.

### I. Herstellung der amphiphilen Polymerzusammensetzung:

### I.1 Herstellungsbeispiel 1:

1444 g Tetrahydrofuran wurden unter Rückfluss erhitzt. Innerhalb von 2 Stunden; gab man gleichzeitig Zulauf 1a, bestehend aus 2109 g Methylmethacrylat und 703 g Styrol, sowie Zulauf 1b, bestehend aus 1444 g Tetrahydrofuran (THF), 18,6 g Azobisisobutyronitril (AIBN) und 58,4 g Mercaptoethanol, zu und hielt die Mischung 24 h unter Rückfluss. Dann gab man 430 g eines handelsüblichen Biurets des Hexamethylendiisocyanat (NCO-Gehalt von 22 %, Viskosität bei 23 °C von 4,0 Pa.s) und 0,1 g Dibutylzinndilaurat zu und rührte die Reaktionsmischung unter Beibehaltung der Temperatur so lange, bis der NCO-Gehalt der Mischung auf 1,02 % gefallen ist. Anschließend gab man zu der Mischung 3000 g eines Methyl-terminierten Polyethylenoxids (zahlenmittleres Molekulargewicht 2000 Dalton, KOH-Zahl 33 mg/g Festsubstanz) und rührte die Reaktionsmischung unter Beibehaltung der Temperatur so lange, bis der NCO-Gehalt 0 % betrug. Dann gab man innerhalb von 30 min 14,7 kg Wasser zu und destillierte Tetrahydrofuran unter vermindertem Druck ab. Auf diese Weise erhielt man eine 30 gew.-%ige wässrige Dispersion der amphiphilen Polymerzusammensetzung mit einer mittleren Teilchengröße von 50 nm (bestimmt durch dynamische Lichtstreuung).

### I.2 Herstellungsbeispiel 2:

1444 g THF wurden unter Rückfluss erhitzt. Innerhalb von 2 Stunden, gab man gleichzeitig Zulauf 1a, bestehend aus 2109 g Methylmethacrylat und 703 g Styrol, sowie Zulauf 1 b, bestehend aus 1444 g Tetrahydrofuran, 18,6 AIBN und 58,4 g Mercaptoethanol, zu und hielt die Mischung 24 h unter Rückfluss. Dann gab man 167 g Isophorondiisocyanat und 0,7 g Dibutylzinndilaurat zu und rührte die Reaktionsmischung unter Beibehaltung der Temperatur so lange, bis der NCO-Gehalt auf 0,53 % gefallen ist. Anschließend gab man zu der Mischung 1500 g eines Methyl-terminierten Polyethylenoxids (zahlenmittleres Molekulargewicht 2000 Dalton, KOH-Zahl 33 mg/g Festsubstanz) und rührte die Reaktionsmischung unter Beibehaltung der Temperatur so lange, bis der NCO-Gehalt 0 % betrug. Dann gab man innerhalb von 30 min 10,6 kg Wasser zu und destillierte Tetrahydrofuran unter vermindertem Druck ab. Auf diese Weise erhielt man eine 30 gew.-%ige wässrige Dispersion der amphiphilen Polymerzusammensetzung mit einer mittleren Teilchengröße von 52 nm (bestimmt durch dynamische Lichtstreuung).

### I.3 Herstellungsbeispiel 3:

1444 g THF wurden unter Rückfluss erhitzt. Innerhalb von 2 Stunden, gab man gleichzeitig Zulauf 1 a, bestehend aus 2109 g Methylmethacrylat und 703 g Styrol, sowie Zulauf 1 b, bestehend aus 1444 g Tetrahydrofuran, 18,6 AIBN und 58,4 g Mercaptoethanol, zu und hielt die Mischung 24 h unter Rückfluss. Dann gab man 430 g eines handelsüblichen Biurets des Hexamethylendiisocyanat (NCO-Gehalt von 22 %, Viskosität bei 23 °C von 4,0 Pa.s), 3000 g eines Methylterminierten Polyethylenoxids (zahlenmittleres Molekulargewicht 2000 Dalton, KOH-Zahl 33 mg/g Festsubstanz) und 0,87 g Dibutylzinndilaurat zu und rührte die Reaktionsmischung unter Beibehaltung der Temperatur so lange, bis der NCO-Gehalt 0 % betrug. Dann gab man innerhalb von 30 min 14,7 kg Wasser zu und destillierte Tetrahydrofuran unter vermindertem Druck ab. Auf diese Weise erhielt man eine 30 gew.-%ige wässrige Dispersion der amphiphilen Polymerzusammensetzung mit einer mittleren Teilchengröße von 52 nm (bestimmt durch dynamische Lichtstreuung).

### I.4 Herstellungsbeispiel 4:

430 g des in Herstellungsbeispiel 1 eingesetzten handelsüblichen Biurets des Hexamethylendiisocyanats, 3000 g eines methylterminierten Polyethylenoxids (OH-Zahl 33 mg KOH/g Festsubstanz) und 117 mg Dibutylzinndilaurat wurden in 3430 g Tetrahydrofuran gelöst. Die Lösung wurde solange bei Rückflusstemperatur gerührt, bis der NCO-Gehalt 0,46 % betrug.

1444 g THF wurden unter Rückfluss erhitzt. Innerhalb von 2 Stunden gab man gleichzeitig Zulauf 1a, bestehend aus 2109 g Methylmethacrylat und 703 g Styrol, sowie Zulauf 1 b, bestehend aus 1444 g Tetrahydrofuran, 18,6 g AIBN und 58,4 g Mercaptoethanol, zu und hielt die Mischung 24 h unter Rückfluss. Dann gab man das zwischenzeitlich hergestellte Umsetzungsprodukt aus Biuret des Hexamethylendüsocyanats mit einem methylterminierten Polyethylenoxids hinzu und rührte die Reaktionsmischung unter Beibehaltung der Temperatur so lange, bis der NCO-Gehalt 0 % betrug. Dann gab man innerhalb von 30 min. 14,7 kg Wasser zu und destillierte Tetrahydrofuran im Vakuum ab. Auf diese Weise erhielt man eine 30 %ige wässrige Dispersion der amphiphilen Polymerzusammensetzung (Teilchengröße 129 nm, gemessen mit dynamischer Lichtstreuung).

### II. Herstellung erfindungsgemäßer wässriger Wirkstoffzubereitungen

### II.1 Analytik:

Die hier angegebenen Viskositäten wurden in einem Rotationsviskosimeter nach DIN 53019-2 bestimmt.

Die Bestimmung der mittleren Teilchendurchmesser erfolgte nach der Methode der statischen Lichtstreuung an einer verdünnten Probe der wässrigen Wirkstoffformulierung bei 20 °C.

Zur Prüfung der Lagerungsstabilität wurden die wässrigen Wirkstoffzusammensetzungen 2 Wochen bei 54 °C und 2 Wochen bei 5 °C gelagert. Außerdem wurden die Wirkstoffzusammensetzungen eingefroren und wieder aufgetaut. Lagerstabilität ist dann gegeben, wenn unter diesen Bedingungen weder Sedimentation noch ein Aufrahmen beobachtet wird.

### II.2 Allgemeine Herstellungsvorschriften:

1. Solubilisierungsmethode (flüssige Wirkstoffe und Wirkstoffschmelzen):
   10 g Wirkstoff werden in 90 g einer wässrigen Dispersion einer amphiphilen Polymerzusammensetzung, enthaltend 30 g Polymer, bei einer Temperatur eingerührt, bei welcher der Wirkstoff als niedrigviskose Schmelze vorliegt. Je nach Viskosität von Polymerlösung und Wirkstoffschmelze erfolgt das Einrühren unter Verwendung eines Magnetrührers oder eines Ultraturrax. Die erforderliche Zeit bis zum Solubilisierungsgleichgewicht ist abhängig von der Polymerzusammensetzung und vom Wirkstoff und kann wenige Sekunden aber auch einige Stunden dauern. Das Solubilisierungsgleichgewicht ist erreicht, wenn sich der Wirkstoff gleichmäßig in der Mischung verteilt hat und trotz weiterem Energieeintrag keine Änderung der Teilchengröße beobachtet wird.
2. Phaseninversionsmethode:
   10 g des flüssigen oder festen Wirkstoffs und 30 g der amphiphilen Polymerzusammensetzung (Polymergehalt > 95 Gew.-%) werden in einem organischen Lösemittel gelöst, welches einen Siedepunkt unter 100 °C hat (z. B. Tetrahydrofuran). Dann wird unter Rühren Wasser zugegeben und anschließend wird das organische Lösemittel destillativ entfernt. Es wird soviel Wasser zugegeben, dass die resultierende wässrige Formulierung 10 gew.-%ig an Wirkstoff und 30 gew.-%ig an Polymer ist.
3. Methode der festen Lösung:
   0.5 g der amphiphilen Polymerzusammensetzung (Polymergehalt > 95 Gew.-%) und 0,1 g des Wirkstoffs werden in ca. 20 ml Dimethylformamid gelöst. Anschließend wird das Lösemittel vollständig entfernt (z. B. am Rotationsverdampfer), so dass eine feste Lösung aus hydrophobem Wirkstoff und amphiphiler Polymerzusammensetzung zurückbleibt. Eine gepufferte wässrige Lösung (100 ml, pH 6,8) wird zugegeben und die Mischung 24 Stunden gerührt. Nach Filtrieren wird die Lösung mittels HPLC (UV-Detektor) analysiert und die Konzentration des Wirkstoffs bestimmt.
4. Düsenfällung:
   Eine 30 %ige wässrige Polymerdispersion wird mit einer 40 %igen Wirkstoff/THF-Lösung mittels zwei Pumpen in einer Mischvorrichtung über eine Mischdüse zusammengemischt. Der Durchsatz der Polymerdispersion beträgt 12 kg/h, der Durchsatz der THF-Lösung beträgt 3 kg/h, so dass der Gesamtdurchsatz bei 15 kg/h liegt. Die Mischvorrichtung ist vergleichbar mit der in "Handbook of Industrial Crystallization" (A. S. Myerson, 1993 Butterworth-Heinemann. Seite 139, ISBN 0-7506-9155-7) beschriebene Apparatur. Man erhielt eine hellgelbe milchige Suspension mit 8 % Wirkstoff und 24 % Polymer. Anschließend wird THF und ein Teil des Wassers destillativ entfernt, so dass eine wässrige nanopartikuläre Formulierung mit 10 % Wirkstoff und 30 % Polymer entsteht.

### II.3 Formulierbeispiel 1: Solubilisierung von Pyraclostrobin nach der Phaseninversionsmethode (allgemeine Vorschrift 2)

10 g Pyraclostrobin wurden zusammen mit 30 g amphiphiler Polymerzusammensetzung aus Beispiel 2 in 100 g THF gelöst. Dann gab man unter Rühren Wasser zu und entfernte das THF unter vermindertem Druck. Die Menge an Wasser war so gewählt, dass die resultierende wässrige Formulierung 10 Gew.-% Wirkstoff und 30 Gew.-% der amphiphilen Polymerzusammensetzung enthielt.

Die erhaltene Wirkstoffzusammensetzung war homogen, nahezu visuell transparent, mindestens mehrere Monate sedimentationsstabil und ließ sich mit Wasser (sowohl mit vollentsalztem Wasser und Wasser 10°dH) verdünnen, ohne dass eine Sedimentation oder eine Kristallisation des Wirkstoffs auftrat. Die disperse Phase (Polymer/ Wirkstoff-Partikel) hatte eine sphärische Struktur und wies einen mittleren Durchmesser, bestimmt durch Lichtstreuung, von ca. 30 nm auf.

### II.4 Formulierungsbeispiel 2: Solubilisierung von Pyraclostrobin nach der Solubilisierungsmethode (allgemeine Vorschrift 1)

Pyraclostrobin ist bei 70 °C eine gut fließende Schmelze (Viskosität 2200 mPas) und wurde auch nach der allgemeinen Vorschrift 1 bei einer Temperatur von 70 °C formuliert. Die erhaltene Wirkstoffzusammensetzung war homogen, nahezu visuell transparent, mindestens mehrere Monate sedimentationsstabil und ließ sich mit Wasser (sowohl mit vollentsalztem Wasser und Wasser 10°dH) verdünnen, ohne dass eine Sedimentation oder eine Kristallisation des Wirkstoffs auftrat.

Die disperse Phase (Polymer/ Wirkstoff-Partikel) hatte eine sphärische Struktur und wies einen mittleren Durchmesser, bestimmt durch Lichtstreuung, von ca. 30 nm auf.

### II.5 Formulierbeispiel 3: Solubilisierung von Pyraclostrobin nach der Düsenfällung (allgemeine Vorschrift 4)

Pyraclostrobin wurde nach der allgemeinen Vorschrift 4 formuliert. Die erhaltene Wirkstoffzusammensetzung war homogen, nahezu visuell transparent, mindestens mehrere Monate sedimentationsstabil und ließ sich mit Wasser (sowohl mit vollentsalztem Wasser und Wasser 10°dH) verdünnen, ohne dass eine Sedimentation oder eine Kristallisation des Wirkstoffs auftrat.

### II.6 Formulierbeispiel 4: Solubilisierung von Metconazol nach der Phaseninversionsmethode (allgemeine Vorschrift 2)

10 g Metconazol, ein Feststoff mit Schmelzpunkt von 110 bis 113 °C, wurden zusammen mit 30 g amphiphiler Polymerzusammensetzung aus Beispiel 1 in 100 g THF gelöst. Dann gab man unter Rühren Wasser zu und entfernte das THF unter vermindertem Druck. Die Menge an Wasser war so gewählt, dass die resultierende wässrige Formulierung 10 Gew.-% Wirkstoff und 30 Gew.-% der amphiphilen Polymerzusammensetzung enthielt.

Die erhaltene Wirkstoffzusammensetzung war homogen, nahezu visuell transparent, mindestens mehrere Monate sedimentationsstabil und ließ sich mit Wasser (sowohl mit vollentsalztem Wasser und Wasser 10°dH) verdünnen, ohne dass eine Sedimentation oder eine Kristallisation des Wirkstoffs auftrat. Die disperse Phase (Polymer/Wirkstoff-Partikel) hatte eine sphärische Struktur und wies einen mittleren Durchmesser, bestimmt durch Lichtstreuung, von ca. 30 nm auf.

In analoger Weise können auch die anderen in Tabelle 1 angegebenen Wirkstoffe formuliert werden.

**Tabelle 1**

| **Wirkstoff** | Löslichkeit in destilliertem Wasser [mg/l] |
|---|---|
| Epoxyconazol | 6,63 |
| Boscalid | 4,6 |
| Pyraclostrobin | 2,4 |
| Metconazol | 15 |
| alpha-Cypermethrin | 0,01 |

### II.7 Formulierbeispiel 5: Solubilisierung von Vitamin A - Acetat nach der Phaseninversionsmethode (allgemeine Vorschrift 2)

10 g Vitamin A - Acetat wurden zusammen mit 30 g amphiphiler Polymerzusammensetzung aus Beispiel 1 in 100 g THF gelöst. Dann gab man unter Rühren Wasser zu und entfernte das THF unter vermindertem Druck. Die Menge an Wasser war so gewählt, dass die resultierende wässrige Formulierung 10 Gew.-% Wirkstoff und 30 Gew.-% der amphiphilen Polymerzusammensetzung enthielt.

Die erhaltene Wirkstoffzusammensetzung war homogen, nahezu visuell transparent, mindestens mehrere Monate sedimentationsstabil und ließ sich mit Wasser (sowohl mit vollentsalztem Wasser und Wasser 10°dH) verdünnen, ohne dass eine Sedimentation oder eine Kristallisation des Wirkstoffs auftrat.

### III Anwendungstechnische Prüfung

### III.1 Überprüfung der fungiziden Wirksamkeit

Die wässrige Wirkstoffzusammensetzung aus Formulierungsbeispiel 1 wurde mit zwei kommerziellen Formulierungen des gleichen Wirkstoffs Pyraclostrobin bezüglich ihrer Aktivität gegen Phytophthora infestans an Tomaten im Gewächshaus gemäß folgender Vorschrift verglichen (Präventivtest, protektive Wirksamkeit):

Die Wirkstoffformulierungen wurden mit Leitungswasser auf die gewünschte Wirkstoffkonzentrationen (zwischen 4 und 250 ppm) verdünnt. Die Applikation auf Tomatenpflanzen erfolgte in einer Spritzkabine mit 25 ml Volumen, welches einer praxisüblichen Wassermenge von ca. 500 l/ha entspricht. Der Standardpilz (Phytophthora infestans) wurde 7 Tage nach Behandlung inokuliert. Die Versuchspflanzen wurden im Gewächshaus bei 18 bis 20 °C und 90 % relativer Luftfeuchte aufgestellt. Die Bonitur erfolgte 5 Tage nach Inokulation durch Bestimmung des prozentualen Befalls der Blätter.

Die Ergebnisse der biologischen Prüfung sind in Tabelle 2 zusammengefasst.
Die Ergebnisse zeigen, dass der in den Polymerpartikeln stabilisierte Wirkstoff eine fungizide Aktivität auf dem Niveau kommerzieller Produkte aufweist.

**Tabelle 2: Phytophthora infestans - Befall [%] an Tomaten nach fünf Tagen als Funktion des Wirkstoffgehalts**

| | Befall [%] | Befall [%] |
|---|---|---|
| Aufwandmenge [mg] | Formulierbeispiel 1 | Verkaufsprodukt ¹⁾ |
| 250 | 0 | 0 |
| 63 | 0 | 0 |
| 16 | 0 | 0 |
| 4 | 3 | 4 |
| 1 | 30 | 50 |

| | | |
|---|---|---|
| 1) EC-Formulierung: 23,5 Gew.-% Pyraclostrobin, 4,7 Gew.-% anionisches Netzmittel und 4,7 Gew.-% nichtionisches Netzmittel in 67,1 Gew.-% eines aromatischen Lösungsmittels | | |

## Patentansprüche

1. Amphiphile Polymerzusammensetzung, erhältlich durch Umsetzung von
a) wenigstens einem hydrophoben Polymer P1, das gegenüber Isocyanatgruppen reaktive funktionelle Gruppen R^{P1} trägt und das aus ethylenisch ungesättigten Monomeren M1 aufgebaut ist, umfassend:
a1) wenigstens 10 Gew.-%, bezogen auf die Gesamtmenge der Monomere M1, Monomere M1 a der allgemeinen Formel I 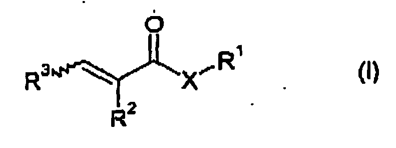 worin X für Sauerstoff oder eine Gruppe N-R⁴ steht;
R¹ C₁-C₁₀-Alkyl, C₅-C₁₀-Cycloalkyl, Phenyl oder Phenyl-C₁-C₄-alkyl steht;
R² Wasserstoff oder C₁-C₄-Alkyl bedeutet;
R³ Wasserstoff oder C₁-C₄-Alkyl bedeutet; und
R⁴ Wasserstoff oder C₁-C₄-Alkyl bedeutet;
a2) bis zu 90 Gew.-%, bezogen auf die Gesamtmenge der Monomere M1, neutrale, monoethylenisch ungesättigte Monomere M1b, deren Wasserlöslichkeit bei 25°C weniger als 50 g/l beträgt und die von den Monomeren M1a verschieden sind; und
a3) bis zu 30 Gew.-%, bezogen auf die Gesamtmenge der Monomere M1, ethylenisch ungesättigte Monomeren M1c, die von den Monomeren M1a und M1b verschieden sind,
b) wenigstens einem hydrophilen Polymer P2, das gegenüber Isocyanatgruppen reaktive funktionelle Gruppen R^{P2} trägt,
c) mit wenigstens einer Isocyanatgruppen enthaltenden Verbindung V, die bezüglich der Isocyanatgruppen eine Funktionalität von wenigstens 1,5 aufweist,
wobei der Anteil des hydrophoben Polymeren P1 an der amphiphilen Polymerzusammensetzung 20 bis 68 Gew.-%, der Anteil des hydrophilen Polymeren P2 an der amphiphilen Polymerzusammensetzung 30 bis 78 Gew.-% und der Anteil der Verbindung V an der amphiphilen Polymerzusammensetzung 2 bis 20 Gew.-%, jeweils bezogen auf das Gesamtgewicht von Polymer P1, Polymer P2 und Verbindung V, beträgt.

2. Polymerzusammensetzung nach Anspruch 1, worin das hydrophobe Polymer bezüglich der funktionellen Gruppen R^{P1} eine Funktionalität F1 im Bereich von 0,5 bis 1,5 besitzt.

3. Polymerzusammensetzung nach einem der vorhergehenden Ansprüche, worin das hydrophobe Polymer P1 ein zahlenmittleres Molekulargewicht im Bereich von 500 bis 20000 Dalton aufweist.

4. Polymerzusammensetzung nach einem der vorhergehenden Ansprüche, worin das hydrophile Polymer keine ionischen Gruppen aufweist.

5. Polymerzusammensetzung nach Anspruch 4, worin das hydrophile Polymer P2 ein aliphatischer Polyether ist, der zu wenigstens 70 Gew.-% aus Ethylenoxid-Gruppen aufgebaut ist.

6. Polymerzusammensetzung nach einem der vorhergehenden Ansprüche, worin das hydrophile Polymer P2 bezüglich der funktionellen Gruppen R^{P2} eine Funktionalität F2 im Bereich von 0,5 bis 3,0 besitzt.

7. Polymerzusammensetzung nach einem der vorhergehenden Ansprüche, worin das hydrophile Polymer P2 ein zahlenmittleres Molekulargewicht im Bereich von 500 bis 20000 Dalton aufweist.

8. Polymerzusammensetzung nach einem der vorhergehenden Ansprüche, worin man das hydrophobe Polymer P1 und das hydrophile Polymer P2 in einem Gewichtsverhältnis P1:P2 im Bereich von 1:4 bis 2,2:1 einsetzt.

9. Verfahren zur Herstellung einer amphiphilen Polymerzusammensetzung nach einem der vorhergehenden Ansprüche, umfassend die Umsetzung
i) wenigstens eines hydrophoben Polymers P1, das aus ethylenisch ungesättigten Monomeren M1 aufgebaut ist und das gegenüber Isocyanatgruppen reaktive funktionelle Gruppen R^{P1} trägt, und
ii) wenigstens eines hydrophilen Polymers P2, das gegenüber Isocyanatgruppen reaktive funktionelle Gruppen trägt R^{P2}, mit
iii) wenigstens einer Isocyanatgruppen enthaltenden Verbindung V, die bezüglich der Isocyanatgruppen eine Funktionalität von wenigstens 1,5 aufweist.

10. Verfahren nach Anspruch 9, worin man das Polymer P1 und das Polymer P2 nacheinander mit der Verbindung V umsetzt.

11. Verfahren nach Anspruch 9, worin man das Polymer P1 und das Polymer P2 in einem Schritt mit der Verbindung V umsetzt.

12. Verwendung einer amphiphilen Polymerzusammensetzung nach einem der Ansprüche 1 bis 8 zur Stabilisierung von Wirkstoffen und/oder Effektstoffen, die in Wasser bei 25 °C/1013 mbar eine Löslichkeit unterhalb 10 g/l aufweisen, in einem wässrigen Medium.

13. Verwendung einer amphiphilen Polymerzusammensetzung nach einem der Ansprüche 1 bis 8 zur Herstellung von Formulierungen von Wirkstoffen und/oder Effektstoffen, die in Wasser bei 25 °C/1013 mbar eine Löslichkeit unterhalb 10 g/l aufweisen.

14. Verwendung einer amphiphilen Polymerzusammensetzung nach einem der Ansprüche 1 bis 8 zur Herstellung wässriger Formulierungen von Wirkstoffen und Effektstoffen, die in Wasser bei 25 °C/1013 mbar eine Löslichkeit unterhalb 10 g/l aufweisen.

15. Wirkstoffzusammensetzung, umfassend wenigstens einen Wirkstoff und/oder Effektstoff, der in Wasser bei 25 °C/1013 mbar eine Löslichkeit unterhalb 10 g/l aufweist, und wenigstens eine amphiphile Polymerzusammensetzung nach einem der Ansprüche 1 bis 8.

16. Wässrige Wirkstoffzusammensetzung, umfassend ein wässriges Medium als kontinuierliche Phase und wenigstens eine disperse Phase, enthaltend wenigstens einen Wirkstoff und/oder Effektstoff, der in Wasser bei 25 °C/1013 mbar eine Löslichkeit unterhalb 10 g/l aufweist, und wenigstens eine amphiphile Polymerzusammensetzung nach einem der Ansprüche 1 bis 8.

17. Wirkstoffzusammensetzung nach Anspruch 16, wobei die Partikel der dispersen Phase eine mittlere Teilchengröße, bestimmt mittels dynamischer Lichtstreuung, von nicht mehr als 300 nm aufweisen.

18. Wirkstoffzusammensetzung nach Anspruch 15, 16 oder 17, enthaltend den Wirkstoff und/oder Effektstoff und die amphiphile Polymerzusammensetzung in einem Gewichtsverhältnis von 1:10 bis 3:1.

19. Wirkstoffzusammensetzung nach einem der Ansprüche 15 bis 18, mit einem Gehalt an flüchtigen organischen Verbindungen von weniger als 10 Gew.-%, bezogen auf das Gesamtgewicht der Zusammensetzung.

20. Verfahren zur Herstellung einer Wirkstoffzusammensetzung nach einem der Ansprüche 15 bis 19, umfassend die Herstellung einer homogenen, nichtwässrigen Mischung, umfassend die amphiphile Polymerzusammensetzung und wenigstens einen Wirkstoff und/oder Effektstoff.

21. Verfahren zur Herstellung einer wässrigen Wirkstoffzusammensetzung nach einem der Ansprüche 16 bis 19, umfassend:
a) Herstellung einer homogenen, nichtwässrigen Mischung, bestehend aus amphiphiler Polymerzusammensetzung und Wirkstoff und/oder Effektstoff, und
b) Dispergieren der so erhaltenen Mischung mit Wasser.

22. Verfahren zur Herstellung einer wässrigen Wirkstoffzusammensetzung nach einem der Ansprüche 16 bis 19, umfassend:
a) Herstellung einer Lösung von Wirkstoff und/oder Effektstoff und gegebenenfalls amphiphiler Polymerzusammensetzung in einem organischen Lösungsmittel, das einen Siedepunkt unter dem von Wasser aufweist und
b) Vermischen der Lösung des Wirkstoffs und/oder Effektstoffs mit Wasser oder einer wässrigen Lösung des amphiphilen Copolymeren und
c) Entfernen des organischen Lösungsmittels.

23. Verfahren zur Herstellung einer wässrigen Wirkstoffzusammensetzung nach einem der Ansprüche 16 bis 19, umfassend das Einarbeiten des Wirkstoffs und/oder des Effektstoffs in eine wässrige Lösung der amphiphilen Polymerzusammensetzung bei einer Temperatur oberhalb der Schmelztemperatur des Wirkstoffs.

## Claims

1. An amphiphilic polymer composition, obtainable by reacting
a) at least one hydrophobic polymer P1 which carries functional groups R^{P1} which are reactive toward isocyanate groups and which is constructed of ethylenically unsaturated monomers M1, comprising:
a1) at least 10% by weight, based on the total amount of monomers M1, of monomers M1a of the formula I 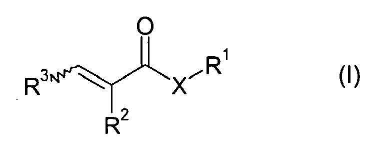 in which X is oxygen or a group N-R⁴;
R¹ is C₁-C₁₀-alkyl, C₅-C₁₀-cycloalkyl, phenyl or phenyl-C₁-C₄-alkyl;
R² is hydrogen or C₁-C₄-alkyl;
R³ is hydrogen or C₁-C₄-alkyl; and
R⁴ is hydrogen or C₁-C₄-alkyl;
a2) up to 90% by weight, based on the total amount of monomers M1, of neutral monoethylenically unsaturated monomers M1b whose solubility in water at 25°C is less than 50 g/l and which are different from the monomers M1a; and
a3) up to 30% by weight, based on the total amount of monomers M1, of ethylenically unsaturated monomers M1c which are different from the monomers M1a and M1b,
b) at least one hydrophilic polymer P2 which carries functional groups R^{P2} which are reactive toward isocyanate groups,
c) with at least one compound V which contains isocyanate groups and, with respect to the isocyanate groups, has a functionality of at least 1.5,
wherein the proportion of hydrophobic polymer P1 in the amphiphilic polymer composition is from 20 to 68% by weight, the proportion of hydrophilic polymer P2 in the amphiphilic polymer composition is from 30 to 78% by weight and the proportion of compound V in the amphiphilic polymer composition is from 2 to 20% by weight, in each case based on the total weight of polymer 1, polymer 2 and compound V.

2. The polymer composition according to claim 1 in which the hydrophobic polymer has, with respect to the functional groups R^{P1}, a functionality F1 in the range from 0.5 to 1.5.

3. The polymer composition according to any of the preceding claims in which the hydrophobic polymer P1 has a number-average molecular weight in the range from 500 to 20 000 dalton.

4. The polymer composition according to any of the preceding claims in which the hydrophilic polymer has no ionic groups.

5. The polymer composition according to claim 4 in which the hydrophilic polymer P2 is an aliphatic polyether, at least 70% by weight of which is constructed from ethylene oxide groups.

6. The polymer composition according to any of the preceding claims in which the hydrophilic polymer P2 has, with respect to the functional groups R^{P2}, a functionality F2 in the range from 0.5 to 3.0.

7. The polymer composition according to any of the preceding claims in which the hydrophilic polymer P2 has a number-average molecular weight in the range from 500 to 20 000 dalton.

8. The polymer composition according to any of the preceding claims in which the hydrophobic polymer P1 and the hydrophilic polymer P2 are employed in a weight ratio P1:P2 in the range from 1:4 to 2.2:1.

9. A process for preparing an amphiphilic polymer composition according to any of the preceding claims, which process comprises reacting
i) at least one hydrophobic polymer P1 which is constructed of ethylenically unsaturated monomers M1 and which carries functional groups R^{P1} reactive toward isocyanate groups, and
ii) at least one hydrophilic polymer P2 which carries functional groups R^{P2} reactive toward isocyanate groups with
iii) at least one compound V which contains isocyanate groups and, with respect to the isocyanate groups, has a functionality of at least 1.5.

10. The process according to claim 9 in which the polymer P1 and the polymer P2 are reacted successively with the compound V.

11. The process according to claim 9 in which the polymer P1 and the polymer P2 are reacted in one step with the compound V.

12. The use of an amphiphilic polymer composition according to any of claims 1 to 8 for stabilizing active compounds and/or effect substances having a solubility in water at 25°C/1013 mbar of less than 10 g/l in an aqueous medium.

13. The use of an amphiphilic polymer composition according to any of claims 1 to 8 for preparing formulations of active compounds and/or effect substances having a solubility in water at 25°C/1013 mbar of less than 10 g/l.

14. The use of an amphiphilic polymer composition according to any of claims 1 to 8 for preparing aqueous formulations of active compounds and effect substances having a solubility in water at 25°C/1013 mbar of less than 10 g/l.

15. An active compound composition comprising at least one active compound and/or effect substance having a solubility in water at 25°C/1013 mbar of less than 10 g/l and at least one amphiphilic polymer composition according to any of claims 1 to 8.

16. An aqueous active compound composition comprising an aqueous medium as continuous phase and at least one disperse phase comprising at least one active compound and/or effect substance having a solubility in water at 25°C/1013 bar of less than 10 g/l and at least one amphiphlic polymer composition according to any of claims 1 to 8.

17. The active compound composition according to claim 16 where the particles of the disperse phase have a mean particle size, determined by dynamic light scattering, of not more than 300 nm.

18. The active compound composition according to claim 15, 16 or 17 comprising the active compound and/or effect substance and the amphiphilic polymer composition in a weight ratio of from 1:10 to 3:1.

19. The active compound composition according to any of claims 15 to 18 having a content of volatile organic compounds of less than 10% by weight, based on the total weight of the composition.

20. A process for preparing an active compound composition according to any of claims 15 to 19 which comprises preparing a homogeneous non-aqueous mixture comprising the amphiphilic polymer composition and at least one active compound and/or effect substance.

21. A process for preparing an aqueous active compound composition according to any of claims 16 to 19, which process comprises:
a) preparing a homogeneous nonaqueous mixture comprising amphiphilic polymer composition and active compound and/or effect substance, and
b) dispersing the resulting mixture with water.

22. A process for preparing an aqueous active compound composition according to any of claims 16 to 19, which process comprises:
a) preparing a solution of active compound and/or effect substance and, if appropriate, amphiphilic polymer composition in an organic solvent having a boiling point below that of water and
b) mixing the solution of the active compound and/or effect substance with water or an aqueous solution of the amphiphilic copolymer and
c) removing the organic solvent.

23. A process for preparing an aqueous active compound composition according to any of claims 16 to 19, which process comprises incorporating the active compound and/or the effect substance into an aqueous solution of the amphiphilic polymer composition, at a temperature above the melting point of the active compound.

## Revendications

1. Composition polymère amphiphile que l'on peut obtenir en faisant réagir :
a) au moins un polymère hydrophobe P1 qui porte des groupements fonctionnels R^{P1} réactifs vis-à-vis des groupements isocyanate et qui est constitué de monomères à insaturation éthylénique M1, comprenant :
a1) au moins 10 % en poids, par rapport à la quantité totale des monomères M1, de monomères M1a de formule générale I 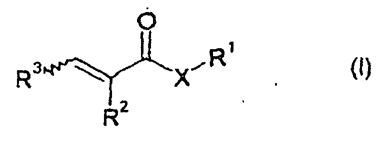 dans laquelle X représente l'oxygène ou un groupement N-R⁴ ;
R¹ représente un groupement alkyle en C₁-C₁₀, cycloalkyle en C₅-C₁₀, phényle ou phénylalkyle en C₁-C₄
R² représente l'hydrogène ou un groupement alkyle en C₁-C₄ ;
R³ représente l'hydrogène ou un groupement alkyle en C₁-C₄ ; et
R⁴ représente l'hydrogène ou un groupement alkyle en C₁-C₄ ;
a2) jusqu'à 90 % en poids, par rapport à la quantité totale des monomères M1, de monomères M1b neutres, à insaturation monoéthylénique, dont la solubilité dans l'eau à 25 °C est inférieure à 50 g/l et qui sont différents des monomères M1a ; et
a3) jusqu'à 30 % en poids, par rapport à la quantité totale des monomères M1, de monomères M1c à insaturation éthylénique, qui sont différents des monomères M1a et M1b,
b) au moins un polymère hydrophile P2 qui porte des groupements fonctionnels R^{P2} réactifs vis-à-vis des groupements isocyanate,
c) avec au moins un composé V contenant des groupements isocyanate qui présente, par rapport aux groupements isocyanate, une fonctionnalité d'au moins 1,5,
dans laquelle la fraction du polymère hydrophobe P1 de la composition polymère amphiphile représente 20 à 68 % en poids, la fraction du polymère hydrophile P2 de la composition polymère amphiphile représente 30 à 78 % en poids, et la fraction du composé V de la composition polymère amphiphile représente 2 à 20 % en poids respectivement, sur la base du poids total de polymère P1, de polymère P2 et de composé V.

2. Composition polymère selon la revendication 1, dans laquelle le polymère hydrophobe possède, par rapport aux groupements fonctionnels R^{P1}, une fonctionnalité F1 dans la plage de 0,5 à 1,5.

3. Composition polymère selon l'une quelconque des revendications précédentes, dans laquelle le polymère hydrophobe P1 présente un poids moléculaire moyen en nombre dans la plage de 500 à 20 000 daltons.

4. Composition polymère selon l'une quelconque des revendications précédentes, dans laquelle le polymère hydrophile ne présente aucun groupement ionique.

5. Composition polymère selon la revendication 4, dans laquelle le polymère hydrophile P2 est un polyéther aliphatique, qui est constitué pour au moins 70 % en poids de groupements oxyde d'éthylène.

6. Composition polymère selon l'une quelconque des revendications précédentes, dans laquelle le polymère hydrophile P2 possède, par rapport aux groupements fonctionnels R^{P2,} une fonctionnalité F2 dans la plage de 0,5 à 3,0.

7. Composition polymère selon l'une quelconque des revendications précédentes, dans laquelle le polymère hydrophile P2 présente un poids moléculaire moyen en nombre dans la plage de 500 à 20 000 daltons.

8. Composition polymère selon l'une quelconque des revendications précédentes, dans laquelle on utilise le polymère hydrophobe P1 et le polymère hydrophile P2 dans un rapport pondéral P1:P2 situé dans la plage de 1:4 à 2,2:1.

9. Procédé de fabrication d'une composition polymère amphiphile selon l'une quelconque des revendications précédentes, comprenant la réaction suivante :
i) au moins un polymère hydrophobe P1, qui est constitué de monomères M1 à insaturation éthylénique et qui porte des groupements fonctionnels R^{P1} réactifs vis-à-vis des groupements isocyanate, et
ii) au moins un polymère hydrophile P2 qui porte des groupements fonctionnels R^{P2} réactifs vis-à-vis des groupements isocyanate, avec
iii) au moins un composé V contenant des groupements isocyanate qui présente, par rapport aux groupements isocyanate, une fonctionnalité d'au moins 1,5.

10. Procédé selon la revendication 9, dans laquelle on fait successivement réagir le polymère P1 et le polymère P2 avec le composé V.

11. Procédé selon la revendication 9, dans laquelle on fait réagir le polymère P1 et le polymère P2 avec le composé V en une seule étape.

12. Utilisation d'une composition polymère amphiphile selon l'une quelconque des revendications 1 à 8, pour stabiliser, dans un milieu aqueux, des principes actifs et/ou des composés produisant un effet qui présentent dans l'eau à 25 °C et sous une pression de 1013 mbar, une solubilité inférieure à 10 g/l.

13. Utilisation d'une composition polymère amphiphile selon l'une quelconque des revendications 1 à 8, pour fabriquer des formulations de principes actifs et/ou de composés produisant un effet qui présentent dans l'eau à 25 °C et sous une pression de 1013 mbar, une solubilité inférieure à 10 g/l.

14. Utilisation d'une composition polymère amphiphile selon l'une quelconque des revendications 1 à 8, pour fabriquer des formulations aqueuses de principes actifs et de composé produisant un effet qui présentent dans l'eau à 25 °C et sous une pression de 1013 mbar, une solubilité inférieure à 10 g/l.

15. Composition de principes actifs, comprenant au moins un principe actif et/ou un composé produisant un effet qui présente dans l'eau à 25 °C et sous une pression de 1013 mbar, une solubilité inférieure à 10 g/l, et au moins une composition polymère amphiphile selon l'une quelconque des revendications 1 à 8.

16. Composition aqueuse de principes actifs, comprenant un milieu aqueux comme phase continue et au moins une phase dispersée, contenant au moins un principe actif et/ou un composé produisant un effet qui présente dans l'eau à 25 °C et sous une pression de 1013 mbar, une solubilité inférieure à 10 g/l, et au moins une composition polymère amphiphile selon l'une quelconque des revendications 1 à 8.

17. Composition de principes actifs selon la revendication 16, dans laquelle les particules de la phase dispersée présentent une taille particulaire moyenne, déterminée par diffusion dynamique de la lumière, qui ne dépasse pas 300 nm.

18. Composition de principes actifs selon l'une quelconque des revendications 15, 16 ou 17, qui contient le principe actif et/ou le composé produisant un effet et la composition polymère amphiphile dans un rapport pondéral de 1:10 à 3:1.

19. Composition de principes actifs selon l'une quelconque des revendications 15 à 18, présentant une teneur en composés organiques volatils inférieure à 10 % en poids par rapport au poids total de la composition.

20. Procédé de fabrication d'une composition de principes actifs selon l'une quelconque des revendications 15 à 19, comprenant la fabrication d'un mélange homogène non aqueux, comprenant la composition polymère amphiphile et au moins un principe actif et/ou un composé produisant un effet.

21. Procédé de fabrication d'une composition aqueuse de principes actifs selon l'une quelconque des revendications 16 à 19, comprenant les étapes suivantes :
a) fabrication d'un mélange homogène, non aqueux, constitué d'une composition polymère amphiphile et d'un principe actif et/ou d'un composé produisant un effet, et
b) dispersion du mélange obtenu de la sorte avec de l'eau.

22. Procédé de fabrication d'une composition aqueuse de principes actifs selon l'une quelconque des revendications 16 à 19, comprenant les étapes suivantes :
a) fabrication d'une solution de principe actif et/ou de composé produisant un effet et, éventuellement, d'une composition polymère amphiphile, dans un solvant organique qui présente un point d'ébullition inférieur à celui de l'eau, et
b) mélange de la solution de principe actif et/ou de composé produisant un effet à de l'eau ou à une solution aqueuse du copolymère amphiphile, et
c) élimination du solvant organique.

23. Procédé de fabrication d'une composition aqueuse de principes actifs selon l'une quelconque des revendications 16 à 19, comprenant l'incorporation du principe actif et/ou du composé produisant un effet à une solution aqueuse de la composition polymère amphiphile, à une température supérieure à la température de fusion du principe actif.
